# EUROPEAN PATENT APPLICATION

(11) **EP 4 425 388 A1**
(43) Date of publication of application: **04.09.2024**
(21) Application number: 22886016.9
(22) Date of filing: 26.10.2022
(51) Int. Cl.: G06N 10/20, G06N 10/40

(54) **QUANTUM CONTROL APPARATUS, QUANTUM CONTROL SYSTEM AND QUANTUM COMPUTER**

(30) Priority: 29.10.2021 CN 202111274743; 02.12.2021 CN 202111472916; 29.01.2022 CN 202210113240
(71) Applicant: Origin Quantum Computing Technology (Hefei) Co., Ltd, Hefei, Anhui 230088 (CN)
(72) Inventor: LI, Xuebai, Hefei, Anhui 230088 (CN); FAN, Liangchen, Hefei, Anhui 230088 (CN); WANG, Jintao, Hefei, Anhui 230088 (CN); TANG, Zhilin, Hefei, Anhui 230088 (CN); KONG, Weicheng, Hefei, Anhui 230088 (CN)
(74) Representative: advotec.
(86) International application number: PCT/CN2022/127663
(87) International publication number: WO 2023/072140

(57) **Abstract**

A quantum control apparatus, a quantum control system, and a quantum computer are provided. The quantum control apparatus (10) includes a backplane (120), a routing module (130), at least one quantum state control module (140), at least one frequency control module (150), and at least one measurement module (160). The quantum state control module (140), the frequency control module (150), the measurement module (160) and the routing module (130) are arranged in sockets of the backplane (120). The quantum state control module (140), the frequency control module (150), and the measurement module (160) are all in communication connection with the routing module (130), and perform data interaction via the routing module (130). The volume and cost of a quantum control system dedicated to a quantum chip and constructed by the quantum control apparatus are greatly reduced, integration and expansion of the quantum control system are easy to implement, and the number of controlled qubits can be flexibly configured, such that measurement and control requirements of a high-quantum-bit quantum chip can be met.

## Description

This application claims priority to Chinese Patent Application No. 202111274743.4, entitled "QUANTUM CONTROL APPARATUS, QUANTUM CONTROL SYSTEM AND QUANTUM COMPUTER" and filed with the China Patent Office on October 29, 2021, priority to Chinese Patent Application No. 202111472916.3, entitled "QUANTUM CONTROL SYSTEM AND QUANTUM COMPUTER" and filed with the China Patent Office on December 2, 2021, and priority to Chinese Patent Application No. 202210113240.7, entitled "QUANTUM CONTROL APPARATUS AND QUANTUM CONTROL SYSTEM" and filed with the China Patent Office on January 29, 2022, the entire contents of which are incorporated herein by reference.

### TECHNICAL FIELD

The present disclosure relates to the field of quantum computing, and in particular, to a quantum control apparatus, a quantum control system and a quantum computer.

### BACKGROUND

A quantum computer is a physical apparatus that performs high-speed mathematical and logical operations and stores and processes quantum information based on laws of quantum mechanics. A quantum chip is a core of a quantum computer. The quantum chip includes a plurality of qubits. In order to ensure normal operation of the qubits, a quantum control system is arranged to provide, by means of various devices in the quantum control system, various control signals for each qubit, such as a frequency control signal and a quantum state control signal. In addition, results of quantum computing performed on the qubits need to be read out and measured. Therefore, when a number of the qubits on the quantum chip increases to hundreds or even tens of millions, more and more complex quantum computing tasks are performed, a number of signals required in a quantum measurement system may also increase accordingly, the arrangement of signal lines is more complex, and the system has a larger volume. Therefore, integration and expansion of the quantum control system are urgent problems.

It is to be noted that the information disclosed in Background of the present disclosure is only intended to deepen the understanding of the general background of the present disclosure, and should not be regarded as acknowledging or in any form implying that the information constitutes the prior art well known to those skilled in the art.

### SUMMARY

The present disclosure provides a quantum control apparatus, a quantum control system and a quantum computer, so as to solve the deficiencies in the prior art. The structure of the control apparatus in the present disclosure adopts a modular design and includes all functional units for control and measurement of qubits in a quantum chip, which facilitates integration and expansion of the quantum control system.

In order to achieve the above objective, in a first aspect of the present disclosure, some embodiments provide a quantum control apparatus, including: a backplane; a routing module; at least one quantum state control module; at least one frequency control module; and at least one measurement module.

The at least one quantum state control module, the at least one frequency control module, the at least one measurement module, and the routing module are arranged in respective sockets of the backplane to form a measurement and control integrated backplane for a quantum chip.

The at least one quantum state control module, the at least one frequency control module, and the at least one measurement module are all in communication connection with the routing module, and perform data interaction by means of the routing module, so that the at least one quantum state control module outputs an initial quantum state control signal, the at least one frequency control module outputs an initial frequency control signal, and the at least one measurement module outputs an initial measurement signal.

In some embodiments, a number of qubits controlled by the quantum state control module and the frequency control module is greater than or equal to a number of qubits read and measured by the measurement module.

In some embodiments, each of the quantum state control module, the frequency control module, and the measurement module includes a plurality of output channels.

In some embodiments, the quantum state control module includes a first digital-to-analog converter (DAC) or a first arbitrary waveform generator (AWG), the frequency control module includes a second DAC or a second AWG, the measurement module includes an analog-to-digital/digital-to-analog converter (ADC/DAC), or includes a third ADC, or includes a third AGW and a data acquisition (DAQ) unit, and the routing module includes a field programmable gate array (FPGA).

In some embodiments, the at least one quantum state control module, the at least one frequency control module, and the at least one measurement module are arranged in the sockets of the backplane and distributed with the routing module being a center.

In some embodiments, the routing module are connected to the at least one quantum state control module, the at least one frequency control module and the at least one measurement module via trigger signal transmission lines respectively, and the trigger signal transmission lines are equal in length.

In some embodiments, the routing module is arranged at a center of the backplane, and each of the at least one measurement module is arranged next to the routing module.

In some embodiments, the apparatus further includes a control module arranged in a socket of the backplane. The control module is configured to acquire signal delay data and output the signal delay data externally. The signal delay data is acquired from the at least one quantum state control module, the at least one frequency control module and the at least one measurement module.

In some embodiments, the apparatus further includes a heat dissipation component connected to a control module. The control module sends a temperature control instruction to the heat dissipation component according to temperature information in the quantum control apparatus, to control the heat dissipation component to operate in different states.

In some embodiments, each of the quantum state control module, the frequency control module, the measurement module, the routing module and the backplane includes a clock synchronization circuit, and all the clock synchronization circuits use a same clock synchronization reference for clock synchronization control over the quantum state control module, the frequency control module, the measurement module and the routing module.

In some embodiments, the apparatus further includes a chassis, where the backplane, the quantum state control module, the frequency control module, the measurement module and the routing module are all arranged in the chassis.

In some embodiments, the apparatus further includes a power supply arranged in the chassis.

In a second aspect of the present disclosure, some embodiments provide a quantum control system, including at least one quantum control apparatus as described in any one of the above.

In some embodiments, the apparatus further includes an auxiliary peripheral equipment. The auxiliary peripheral equipment includes a plurality of microwave local oscillator sources, a radio frequency (RF) transmitting component, an RF transceiver component and a voltage source, the plurality of microwave local oscillator sources and the RF transmitting component cooperate with the quantum control apparatus to generate a quantum state control signal for adjusting quantum state information of qubits, the voltage source cooperates with the quantum control apparatus to generate a frequency control signal for adjusting frequencies of the qubits, and the plurality of microwave local oscillator sources and the RF transceiver component cooperate with the quantum control apparatus to generate a measurement signal for reading states of the qubits and receive a read feedback signal from the quantum chip.

In some embodiments, the system further includes a plurality of microwave sources, and the plurality of microwave sources cooperate with the voltage source to generate a pump signal for driving a Josephson parametric amplifier.

In some embodiments, the voltage source may be a high-precision voltage source in subsequent embodiments.

In some embodiments, the system further includes at least one central control apparatus, and the at least one central control apparatus is in communication connection with the routing module.

In some embodiments, the system further includes a server. The central control apparatus, the auxiliary peripheral equipment and the routing module of the quantum control apparatus are all in communication connection with the server.

In a third aspect of the present disclosure, some embodiments provide a quantum computer, including the quantum control apparatus in the embodiments in the first aspect, or the quantum control system in the embodiments in the second aspect.

Based on the embodiments in the first aspect above, the quantum control apparatus proposed in the present disclosure includes at least one quantum state control module, at least one frequency control module, at least one measurement module and a routing module. The quantum state control module, the frequency control module and the measurement module include all functional units for control and measurement of qubits in the quantum chip. The entire control apparatus adopts a modular structure design. The at least one quantum state control module, the at least one frequency control module, the at least one measurement module and the routing module are all arranged in the corresponding sockets in the backplane, with a high degree of integration. Moreover, the quantum state control module, the frequency control module and the measurement module are all in communication connection with the routing module, so as to perform external data interaction by means of the routing module, so that wiring in the apparatus is simple and clear, and expansion is easy to implement. The quantum control system dedicated to a quantum chip is constructed using the quantum control apparatus in the present disclosure. Therefore, the quantum control system is highly integrated and scalable, the volume and cost thereof are greatly reduced, and the number of controlled qubits can be flexibly configured, such that measurement and control requirements of a high-quantum-bit quantum chip can be met.

A further objective of the present disclosure is to provide a quantum control system and a quantum computer, so as to solve the deficiencies in the prior art, which enables complete realization of high-precision measurement and control operations on superconducting quantum chips and has good system scalability and overall coordination.

In order to achieve the above objective, in a fourth aspect of the present disclosure, some embodiments provide a quantum control system.

The quantum control system includes: at least one signal processing apparatus and at least one RF transceiver apparatus.

Each signal processing apparatus includes a first backplane, a plurality of first signal processing boards, a plurality of second signal processing boards and a routing board. The plurality of first signal processing boards, the plurality of second signal processing boards and the routing board are socketed to a backplane connector of the first backplane to form a measurement and control integrated backplane for a quantum chip, the plurality of first signal processing boards and the plurality of second signal processing boards are all connected to the routing board, the plurality of second signal processing boards each are configured to generate a low-frequency signal, and the low-frequency signal is a frequency control signal.

The at least one RF transceiver apparatus is in communication connection with the first signal processing boards by means of the routing board. The at least one RF transceiver apparatus cooperates with the plurality of first signal processing boards in communication connection therewith to generate and receive a high-frequency signal, and the high-frequency signal includes a quantum state control signal and a measurement signal.

In some embodiments, each of the plurality of first signal processing boards and the plurality of second signal processing boards includes a plurality of signal output channels and/or a plurality of signal input channels, and a number of signal output channels of each RF transceiver apparatus is no less than a sum of numbers of the signal output channels of the first signal processing boards connected to the RF transceiver apparatus.

In some embodiments, the routing board is socketed to the backplane connector at a center of the first backplane.

In some embodiments, the high-frequency signal includes a measurement signal and a quantum state control signal for controlling qubits, and the measurement signal includes a read output signal and a read input signal for reading the qubits.

In some embodiments, the plurality of first signal processing boards include a first AWG board and a DAQ board.

In some embodiments, the low-frequency signal includes a pulse signal for controlling frequencies of the qubits and/or a tunable coupler.

In some embodiments, the signal processing apparatus further includes a plurality of third signal processing boards, the plurality of third signal processing boards are configured to generate direct current (DC) signals, and the DC signals include a frequency drive signal for controlling frequencies of qubits and/or a tunable coupler.

In some embodiments, the plurality of third signal processing boards include a DC source board.

The plurality of second signal processing boards include: a second AWG board configured to generate the low-frequency signal.

In some embodiments, the quantum control system further includes a plurality of multi-channel microwave sources, microwave signals generated by the plurality of multi-channel microwave sources are used to drive a pump signal of a parametric amplifier, and the DC signals generated by the plurality of third signal processing boards further include a frequency control signal for the parametric amplifier.

In some embodiments, each of the at least one RF transceiver apparatus includes a plurality of RF transmitting components, a plurality of RF receiving components and a plurality of microwave local oscillator sources. The plurality of RF transmitting components are connected to the first signal processing boards and the plurality of microwave local oscillator sources and configured to generate the high-frequency signal. The plurality of RF receiving components are connected to the plurality of first signal processing boards and the plurality of microwave local oscillator sources and configured to perform frequency conversion processing on a received high-frequency signal and then transmit the high-frequency signal to the plurality of first signal processing boards.

In some embodiments, the plurality of RF transmitting components and the plurality of RF receiving components each include an in-phase/quadrature (IQ) mixer.

In some embodiments, the plurality of microwave local oscillator sources each include a microwave point frequency source or a tunable local oscillator frequency source.

In some embodiments, each of the at least one RF transceiver apparatus further includes a second backplane, and the plurality of RF transmitting components and the plurality of RF receiving components of each of the at least one RF transceiver apparatus are all socketed to a backplane connector of the second backplane.

In some embodiments, the first backplane and the second backplane are both provided with a control board and a power board. The control board on the first backplane is connected to the plurality of first signal processing boards, the plurality of second signal processing boards, and the routing board, and the power board on the first backplane supplies power to the first backplane and devices on the first backplane. The control board on the second backplane is connected to the plurality of RF transmitting components and the plurality of RF receiving components, and the power board on the second backplane supplies power to the second backplane and devices on the second backplane.

In some embodiments, the quantum control system further includes a clock synchronization apparatus. Each of the at least one signal processing apparatus and each of the at least one RF transceiver apparatus are connected to the clock synchronization apparatus, and the clock synchronization apparatus is configured to provide a same reference clock for the signal processing apparatus and the RF transceiver apparatus.

In some embodiments, the quantum control system further includes a central control apparatus, all the routing board of the at least one signal processing apparatus is connected to the central control apparatus, and the central control apparatus is configured to synchronously control the plurality of first signal processing boards and the plurality of second signal processing boards by means of the routing board.

In some embodiments, the quantum control system further includes a server communicated with a central control apparatus and/or the routing board.

In some embodiments, the system further includes a server and a network switch. Each of the at least one RF transceiver apparatus communicates with the server by means of the network switch, and the routing board communicates with the server.

Based on a same invention concept, in a fifth aspect of the present disclosure, some embodiments provide a quantum computer, including the quantum control system in any one of the embodiments in the fourth aspect.

Based on any one of the above aspects, the quantum control system proposed in the present disclosure includes at least one signal processing apparatus, and each of the at least one signal processing apparatus includes a first backplane, a plurality of first signal processing boards, a plurality of second signal processing boards and a routing board. The plurality of first signal processing boards, the plurality of second signal processing boards and the routing board are plugged into a backplane connector on the first backplane. All the first signal processing boards and the second signal processing boards are connected to the routing board and perform external data interaction by means of the routing board. The core control functions of the quantum control system are realized using the plurality of first signal processing boards and the plurality of second signal processing boards in combination with the routing board. Compared with an existing quantum control system composed of commercial instruments, the quantum control system in the present disclosure is more streamlined in structure and wiring complexity, has high system integration, and is provided with at least one RF transceiver apparatus. The first signal processing boards are connected to the RF transceiver apparatus, the RF transceiver apparatus cooperates with the first signal processing boards connected thereto to generate and receive high-frequency signals, and the second signal processing boards generate low-frequency signals. The high-frequency signals and the low-frequency signals are used for manipulation, control and reading of qubits, so that the quantum control system in the present disclosure has all the functions of qubit manipulation, control, reading and measurement. In addition, all the first signal processing boards and the second signal processing boards perform external data interaction by means of the routing board, which effectively improve overall coordination of the system, thereby enabling complete realization of high-precision measurement and control operations on superconducting quantum chips. In addition, numbers of the first signal processing boards and the second signal processing boards and numbers of the signal processing apparatus and the RF transceiver apparatus can all be set according to measurement and control requirements for a number of bits of qubits of the quantum chip, the system has strong scalability, and due to the use of the backplane connector as a high-speed interface, plug-in expansion is realized, which can expand and prevent reduction of core performance of the system, making the system easy to maintain and use and have good overall system coordination.

A further objective of the present disclosure provides a quantum control apparatus and a quantum control system, so as to solve the defects and deficiencies in the prior art. According to the embodiments of the present disclosure, the selection of different functional modules on the backplane can be accurately controlled.

In order to achieve the above objective, in a sixth aspect of the present disclosure, some embodiments provide a quantum control apparatus, configured to control a measurement and control integrated backplane of a quantum chip, the quantum control apparatus including: a trigger module configured to output a trigger signal; a microcontroller; and a switch module electrically connected to the trigger module and configured to select an operating channel of the microcontroller based on the trigger signal.

The microcontroller is electrically connected to the switch module and configured to set a corresponding control signal according to the selected operating channel and output the control signal, and the control signal is used to control the measurement and control integrated backplane to enter a corresponding operating mode.

In some embodiments, the measurement and control integrated backplane includes a plurality of functional boards, and the switch module includes a plurality of self-locking non-reset switches respectively configured to control reset of the measurement and control integrated backplane and reset of the functional boards via the selected operating channel of the microcontroller.

In some embodiments, the apparatus further includes a first output module electrically connected to the microcontroller and configured to forward the control signal to the measurement and control integrated backplane.

In some embodiments, the apparatus further includes a temperature control module electrically connected to the microcontroller and the measurement and control integrated backplane respectively and configured to monitor a real-time temperature of the measurement and control integrated backplane and adjust in real time the temperature of the measurement and control integrated backplane according to a target temperature.

In some embodiments, the temperature control module includes a plurality of temperature sensors and a plurality of heat sinks, and the plurality of temperature sensors and the plurality of heat sinks are electrically connected to the microcontroller respectively. The plurality of temperature sensors are arranged on the measurement and control integrated backplane respectively, and are configured to detect the real-time temperature of the measurement and control integrated backplane and transmit temperature data to the microcontroller. The microcontroller generates a temperature adjust signal based on the temperature data. The plurality of heat sinks are configured to receive the temperature adjust signal sent by the microcontroller and adjust in real time the temperature of the measurement and control integrated backplane based on the temperature adjust signal and the target temperature.

In some embodiments, the apparatus further includes a second output module and a terminal device in communication connection with each other.

The second output module is electrically connected to the microcontroller and configured to upload operating-state information of the microcontroller, the switch module, the measurement and control integrated backplane and the temperature control module to the terminal device. The terminal device is configured to receive the operating-state information of the microcontroller, the switch module, the measurement and control integrated backplane and the temperature control module and monitor operating states thereof.

In some embodiments, the second output module establishes communication with the terminal device using at least one of a WIFI module, an Ethernet interface, a type-c interface or a 4G module.

In some embodiments, the terminal device includes one or more of a computer, a mobile phone and a multimedia playback device.

In some embodiments, the apparatus further includes a power supply module configured to supply power to the microcontroller, the switch module, the trigger module and the temperature control module.

In some embodiments, the microcontroller is an STM series chip, an STC series chip or an ARM series chip.

In a seventh aspect of the present disclosure, some embodiments provide a quantum control system, including the quantum control apparatus as described in the embodiments in the sixth aspect.

Based on a same invention concept, in an eighth aspect of the present disclosure, some embodiments provide a quantum computer, including the quantum control apparatus in any one of the embodiments in the sixth aspect, or the quantum control system in any one of the embodiments in the seventh aspect.

Compared with the prior art, in the present disclosure, the quantum control apparatus provided in the embodiment in the sixth aspect, the quantum control system provided in the embodiment in the seventh aspect, and the quantum computer provided in the embodiment in the eighth aspect have the following beneficial effects. The quantum control apparatus includes a trigger module, a switch module and a microcontroller. The trigger module is electrically connected to the switch module and is configured to output a trigger signal to the switch module. The switch module is electrically connected to the microcontroller and is configured to select an operating channel of the microcontroller based on the trigger signal. The microcontroller is configured to set a corresponding control signal according to the selected operating channel and output the control signal to the measurement and control integrated backplane. In this embodiment, in specific applications, the microcontroller is connected to a control port of the measurement and control integrated backplane. After receiving the control signal, the microcontroller may enter a corresponding operating mode based on the control signal. The control signal is used to control the measurement and control integrated backplane to enter the corresponding operating mode. According to the present disclosure, the switch module and the microcontroller are additionally provided. The switch module selects an operating channel of the microcontroller, then the control signal is outputted from the selected operating channel to the measurement and control integrated backplane, and the measurement and control integrated backplane enters the corresponding operating mode based on the control signal, thereby achieving accurate control and free control over the operating mode of the measurement and control integrated backplane.

### BRIEF DESCRIPTION OF DRAWINGS

In order to more clearly illustrate the technical solutions in embodiments of the present disclosure or the prior art, the accompanying drawings used in the description of the embodiments or the prior art will be briefly introduced below. It is apparent that, the accompanying drawings in the following description are only some embodiments of the present disclosure and therefore should not be regarded as limitations on the scope, and other accompanying drawings can be obtained by those of ordinary skill in the art from the provided accompanying drawings without creative efforts.
FIG. 1 is a schematic structural diagram of a quantum control apparatus according to some embodiments of the present disclosure;
FIG. 2 is a schematic structural diagram of another quantum control apparatus according to some embodiments of the present disclosure;
FIG. 3 is a schematic structural diagram of a control apparatus including a control module and a heat dissipation component according to some embodiments of the present disclosure;
FIG. 4 is a schematic structural diagram of a control apparatus including a clock synchronization circuit according to some embodiments of the present disclosure;
FIG. 5 is a schematic structural diagram of a control apparatus including a chassis and a power supply according to some embodiments of the present disclosure;
FIG. 6 is a first schematic structural diagram of a quantum control system according to some embodiments of the present disclosure;
FIG. 7 is a second schematic structural diagram of the quantum control system according to some embodiments of the present disclosure;
FIG. 8 is a diagram showing components of a superconducting quantum chip according to some embodiments of the present disclosure;
FIG. 9 is a third schematic structural diagram of the quantum control system according to some embodiments of the present disclosure;
FIG. 10 is a schematic structural diagram of a quantum control system including a third signal processing board according to some embodiments of the present disclosure;
FIG. 11 is a fourth schematic structural diagram of the quantum control system according to some embodiments of the present disclosure;
FIG. 12 is a fifth schematic structural diagram of the quantum control system according to some embodiments of the present disclosure;
FIG. 13 is a schematic structural diagram of a quantum control system including a clock synchronization apparatus according to some embodiments of the present disclosure;
FIG. 14 is a schematic structural diagram of a quantum control system including a central control apparatus and a server according to some embodiments of the present disclosure;
FIG. 15 is a schematic structural diagram of a quantum control system including a server and a network switch according to some embodiments of the present disclosure; and
FIG. 16 is a schematic structural diagram of a yet another quantum control apparatus according to some embodiments of the present disclosure.

### Reference signs:

10: control apparatus, 20: microwave local oscillator source; 30: RF transmitting component, 40: high-precision voltage source, 50: RF transceiver component, 60: central control apparatus, 70: network switch, 80: cabinet, 90: server, 1: quantum control system; 120: backplane, 130: routing module, 140: quantum state control module, 150: frequency control module, 160: measurement module; 1401: first DAC unit, 1501: second AWG unit, 1601: ADC/DAC unit, 170: control module, 180: heat dissipation component, 190: power supply, 110: chassis;
100: trigger module; 200: switch module; 300: microcontroller; 400: measurement and control integrated backplane; 500: temperature control module; 600: terminal device; 700: power supply module.

### DESCRIPTION OF EMBODIMENTS

In order to make the objectives, technical solutions, and advantages of the embodiments of the present disclosure clearer, the technical solutions in the embodiments of the present disclosure will be clearly and fully described below with reference to the accompanying drawings in the embodiments of the present disclosure. It should be understood that the accompanying drawings in the present disclosure are for illustration and description purposes only and are not intended to limit the protection scope of the present disclosure.

In addition, the terms "first" and "second" are used for descriptive purposes only, which cannot be construed as indicating or implying a relative importance, or implicitly specifying the number of the indicated technical features. Therefore, the features defined with "first" and "second" may explicitly or implicitly include one or more features. In the description of the present disclosure, "a plurality of' means two or more, such as two or three, unless specifically stated otherwise.

Generally, a quantum chip involves a plurality of qubits (also called quantum bits) and data transmission lines. Each qubit includes a detector and a qubit apparatus coupled to each other. The qubit apparatus may be an artificial superconducting qubit including a superconducting Josephson junction and a ground capacitor, and the detector may be a resonant cavity. The qubit apparatus includes a first control signal line and a second control signal line. The detector coupled to the qubit apparatus includes a third control signal line. The first control signal line is used to transmit a quantum state control signal for adjusting quantum state information of the qubit apparatus. The second control signal line is used to transmit a frequency control signal for adjusting frequency parameters of the qubit apparatus. The third control signal line is used to transmit a measurement signal for measuring the detector and to output a read feedback signal returned by the detector to realize indirect reading and measurement of a state of the qubit apparatus. Therefore, a quantum control system for control and measurement of qubits in the quantum chip generates and outputs three control signals to the first to third control signal lines respectively to realize the control and measurement of the qubits in the quantum chip.

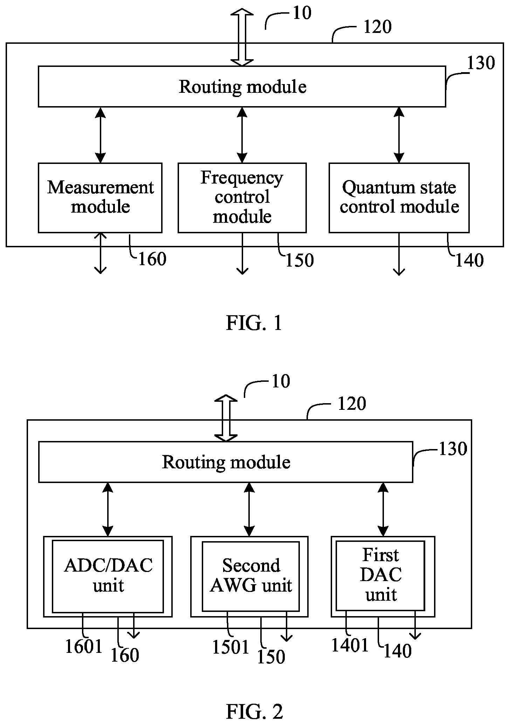

As shown in FIG. 1, some embodiments of the present disclosure provide a quantum control apparatus. The control apparatus 10 includes a backplane 120, a routing module 130, at least one quantum state control module 140, at least one frequency control module 150, and at least one measurement module 160. The at least one quantum state control module 140, the at least one frequency control module 150, the at least one measurement module 160, and the routing module 130 are arranged in sockets of the backplane 120. The at least one quantum state control module 140, the at least one frequency control module 150, the at least one measurement module 160, the routing module 130, and the backplane 120 may form a measurement and control integrated board for a quantum chip. The at least one quantum state control module 140, the at least one frequency control module 150, and the at least one measurement module 160 are all in communication connection with the routing module 130, and perform data interaction by means of the routing module 130. In this way, the at least one quantum state control module 140 and the at least one frequency control module 150 respectively output an initial quantum state control signal and an initial frequency control signal and control the at least one measurement module 160 to output an initial measurement signal.

The at least one quantum state control module 140, the at least one frequency control module 150, and the at least one measurement module 160 in the quantum control apparatus provided in the embodiments of the present disclosure are all functional units for control and measurement of qubits in the quantum chip. Through some embodiments of the present disclosure, all functional signals for the control and measurement of the qubits in the quantum chip may be provided. The entire control apparatus adopts a modular structure design. The at least one quantum state control module 140, the at least one frequency control module 150, the at least one measurement module 160, and the routing module 130 are arranged in respective sockets of the backplane 120, with a high degree of integration. The at least one quantum state control module 140, the at least one frequency control module 150, and the at least one measurement module 160 are all in communication connection with the routing module 130, and perform data interaction by means of the routing module 130, so that wiring between the modules is simple, clear, and easy to add.

It is to be noted that, although the control apparatus in the embodiments of the present disclosure includes all functional units to complete the control and measurement of the qubits on the quantum chip, in consideration of factors such as a low cost, easy integration and expansion, easy maintenance, and high reliability of output signals, in terms of hardware architecture, the control apparatus 10 is designed to be a control core unit of the quantum control system that performs control operations on the quantum chip, which is not exactly equivalent to a complete quantum control system. Therefore, the control apparatus in the embodiments of the present disclosure is used together with a relevant auxiliary peripheral equipment to form a complete quantum control system to complete control and measurement operations on the qubits of the quantum chip.

For example, the routing module 130, after receiving a quantum computing task sent by an external server, sends qubit control instructions and data to the quantum state control module 140 and the frequency control module 150 required by the quantum computing task, and sends qubit read instructions and data to the measurement module 160. Accordingly, the quantum state control module 140 generates and outputs an initial quantum state control signal including a quantum state control parameter, the frequency control module 150 generates and outputs an initial frequency control signal including a qubit frequency control parameter, and the measurement module 160 generates and outputs an initial measurement signal including a qubit state reading parameter.

The initial quantum state control signal is sent to the auxiliary peripheral equipment used in conjunction with the control apparatus to be processed into a quantum state control signal, and the quantum state control signal is supplied to the quantum chip via the first control signal line to adjust quantum state information of the qubit apparatus. The initial frequency control signal is sent to the auxiliary peripheral equipment used in conjunction with the control apparatus to be processed into a frequency control signal, and the frequency control signal is supplied to the quantum chip via the second control signal line to adjust frequency parameters of the qubit apparatus. The initial measurement signal is sent to the auxiliary peripheral equipment used in conjunction with the control apparatus to be processed into a measurement signal, and the measurement signal is supplied to the quantum chip via the third control signal line to read and measure a state of the qubit apparatus. Moreover, the measurement module 160 is further configured to acquire a read feedback signal of the qubit apparatus outputted via the third control signal line, send the read feedback signal to the routing module 130. The routing module 130 processes the read feedback signal, and then outputs the processed signal to the external server.

In addition, the frequency control module 150 may be further configured to adjust tunable coupling between qubits in the quantum chip. Therefore, a number of qubits that are controlled by the quantum state control module 140 and the frequency control module 150 is greater than or equal to a number of qubits that are read and measured by the measurement module 160.

It is to be noted that the number of each module in the control apparatus in FIG. 1 is one. In practical applications, the number of each module in the control apparatus may be set to two or more as required, which is not limited herein. FIG. 1 is only a schematic diagram to facilitate those skilled in the art to better understand the technical solution of the present disclosure, and cannot be regarded as any limitation on the present disclosure. In practical applications, the number of the quantum state control module 140, the number of the frequency control module 150, and the number of the measurement module 160 are set according to numbers of signal output channels of the modules and a number of qubits of the quantum chip that are required to be controlled and measured, and if necessary, presence of tunable coupled qubits in the quantum chip is also required to be taken into account.

It is to be further noted that, in practical applications, the third control signal line may be in one-to-one correspondence with the detector. However, in order to simplify the structure of the data transmission line of the quantum chip, one third control signal line may correspond to a plurality of detectors in the structural design of the quantum chip. For example, one third control signal line corresponds to five detectors, so that one third control signal line can be used to achieve reading and measurement of states of five qubit apparatuses. In this case, one measurement module 160 may be configured to read and measure states of five qubits in the quantum chip. In this case, one signal output channel of the measurement module 160 outputs an initial measurement signal. Synthesis and decomposition technologies of the initial measurement signal do not belong to the content for which protection is sought by the present disclosure, and are not described in detail herein.

In order to further increase the number of the qubits in the quantum chip that can be controlled by the control apparatus, in some embodiments of the present disclosure, each of the at least one quantum state control module 140, the at least one frequency control module 150, and the at least one measurement module 160 is provided with a plurality of signal output channels. That is, each of the at least one quantum state control module 140, the at least one frequency control module 150, and the at least one measurement module 160 is provided with two or more signal output channels. In this case, a maximum channel number of the signal outputted by each of the quantum state control module 140, the frequency control module 150, and the measurement module 160 may reach the number of signal output channels of each module. For example, when each of the at least one quantum state control module 140, the at least one frequency control module 150, and the at least one measurement module 160 is provided with five signal output channels, the number of the qubits in the quantum chip that are controlled by the control apparatus may be five times the number when each of the at least one quantum state control module 140, the at least one frequency control module 150, and the at least one measurement module 160 is provided with one signal output channel. In this case, the integration and the develop flexibility of the control apparatus are also effectively improved.

As shown in FIG. 2, as specific implementations of the embodiments of the present disclosure, the quantum state control module 140 includes a first DAC unit 1401 or a first AWG unit, the frequency control module 150 includes a second DAC unit or a second AWG unit 1501, and the measurement module 160 includes an ADC/DAC unit 1601, or includes a third DAC unit and a DAQ unit, or includes a third AWG unit and a DAQ unit. The first DAC unit 1401 or the first AWG unit is configured to generate the initial quantum state control signal. The second DAC unit or the second AWG unit 1501 is configured to generate the initial frequency control signal. The ADC/DAC unit 1601 or the third DAC unit or the third AWG unit is configured to generate the initial measurement signal and receive the read feedback signal. It is to be noted that FIG. 2 shows an example for illustration in which the quantum state control module 140 includes a first DAC unit 1401, the frequency control module 150 includes a second AWG unit 1501, and the measurement module 160 includes an ADC/DAC unit 1601. In practical applications, signal generation units of the quantum state control module 140, the frequency control module 150, and the measurement module 160 in the control apparatus may be implemented by different functional units as required, which is not limited herein. FIG. 2 is only a schematic diagram to facilitate those skilled in the art to better understand the technical solution of the present disclosure, and cannot be regarded as any limitation on the present disclosure.

In the quantum control system, the first control signal line for adjusting quantum state information of qubits receives a microwave pulse signal including quantum state control information. The microwave pulse signal is generated based on the initial quantum state control signal outputted by the DAC unit 1401. The second control signal line for adjusting frequency parameters of the qubits receives a microwave pulse signal. The microwave pulse signal is generated based on the initial frequency control signal outputted by the second AWG unit 1501. The third control signal line for reading states of the qubits receives a read pulse signal. The read pulse signal is generated based on the initial measurement signal outputted by the ADC/DAC unit 1601. Therefore, the quantum state control module 140, the frequency control module 150, and the measurement module 160 include all functional units for controlling and measuring the qubits in the quantum chip.

The quantum state control module 140, the frequency control module 150, and the measurement module 160 perform data interaction via the routing module 130. The routing module 130 has data forwarding and processing functions, and has high data transmission timeliness. Generally, the routing module 130 may be a FPGA, a microcontroller unit (MCU), a microprocessor unit (MPU), a digital signal processor (DSP), or the like. As an embodiment of the present disclosure, the routing module 130 includes a FPGA. The FPGA is used as a central processing unit to ensure that the routing module 130 has a high degree of functional integration and a high data processing speed. In addition, efficient and reliable data interaction between the quantum state control module 140, the frequency control module 150, and the measurement module 160 may be performed with a high-speed interface circuit.

For a quantum computing task performed in a quantum computer, as types and complexity of the quantum computing task increase, a number of qubits required by the quantum computing task is also increasing. That is, the quantum control systems have more and more output channels. For a complex quantum computing task, a plurality of initial quantum state control signals and a plurality of initial frequency control signals are required. A plurality of quantum state control modules 140 and a plurality of frequency control modules 150 are required to operate together, and signals outputted by all the modules operating together are triggered synchronously to accurately complete the quantum computing task.

In some embodiments of the present disclosure, the quantum state control module 140, the frequency control module 150, and the measurement module 160 are all in communication connection with the routing module 130 via communication lines on the backplane 120. In order to facilitate realization of signal synchronous triggering, in some embodiments of the present disclosure, the at least one quantum state control module 140, the at least one frequency control module 150 and the at least one measurement module 160 are connected to the routing module 130 via trigger signal transmission lines respectively, and these trigger signal transmission lines are equal in length. That is, the trigger signal transmission lines from the modules belonging to a same functional type to the routing module 130 are equal in length. For example, the trigger signal transmission lines from the at least one quantum state control module 140 to the routing module 130 are equal in length. Since each of the at least one quantum state control module 140, the at least one frequency control module 150, and the at least one measurement module 160 is connected to the routing module 130, and the routing module 130 serves as a data transceiver for external data interaction, the trigger signal transmission lines from modules of each functional type to the routing module 130 being equal in length can effectively ensure synchronization of the trigger signals sent by the routing module 130 to the quantum state control modules 140, the frequency control modules 150, and the measurement modules 160, so that the quantum state control modules 140, the frequency control modules 150, and the measurement modules 160 can synchronously trigger quantum state control, frequency control, and qubit state reading related operational signals of the qubits, which improves accuracy of an execution result of the quantum computing task.

In some embodiments of the present disclosure, the at least one quantum state control module 140, the at least one frequency control module 150, and the at least one measurement module 160 are arranged in respective sockets of the backplane 120 and distributed with the routing module 130 being a center. Such a position layout can ensure minimization of the length of the trigger signal transmission line from each of the at least one quantum state control module 140, the at least one frequency control module 150, and the at least one measurement module 160 to the routing module 130, which can effectively improve signal timeliness. In addition, such a position layout design also minimizes a length of a total communication line in the control apparatus, which can effectively save hardware costs.

In some embodiments of the present disclosure, the routing module 130 is arranged at a center of the backplane 120, which can further minimize the length of the trigger signal transmission line from each of the at least one quantum state control module 140, the at least one frequency control module 150, and the at least one measurement module 160 to the routing module 130. In addition, when the qubits perform the quantum computing task, there are strict timing requirements for the quantum state control signal and the measurement signal applied to the quantum chip. Moreover, due to short coherence time of the qubits, the qubits are sensitive to the timeliness of the quantum state control signal, the measurement signal, and an acquisition signal. Therefore, there are high requirements for the timeliness of the initial quantum state control signal outputted by the quantum state control module 140 and the initial measurement signal outputted by the measurement module 160, and the measurement module 160 is generally not calibrated during use. In order to ensure long-term stability and high timeliness of the signals outputted by the at least one quantum state control module 140 and the at least one measurement module 160, in some embodiments of the present disclosure, the at least one measurement module 160 is arranged next to the routing module 130, the at least one quantum state control module 140 is arranged two sides of the routing module 130 and/or the measurement module 160, and the at least one frequency control module 150 is arranged two sides of the quantum state control module 140. In this way, the communication lines between the routing module 130, the quantum state control module 140, and the measurement module 160 is the shortest, and it may also be ensured that the quantum state control module 140, the measurement module 160, and the routing module 130 are in a same temperature zone, line delay during data interaction between the two is short, and the signal is less affected by an ambient temperature.

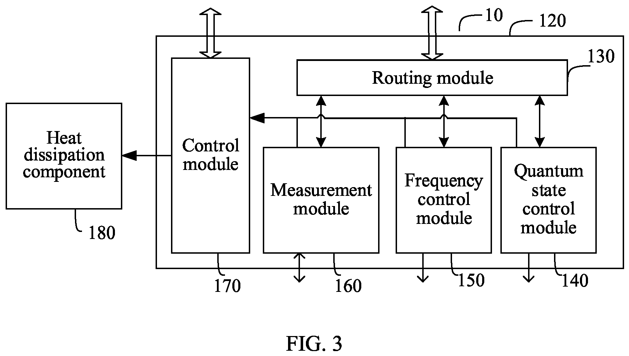

Through various designs of the hardware structures of devices in the control apparatus above, in an ideal state, through the hardware design, it may be ensured that the signals outputted by the modules for the control, measurement, and reading operations on the qubits are synchronously triggered. However, during a practical application, due to various uncontrollable effects such as temperature changes in an operating environment of the device, plugging and unplugging of connectors, and the like, errors in signal delay may still occur, so that it is difficult to guarantee synchronous triggering of the signals simultaneously outputted by the control apparatus for the control, measurement, and reading operations of the qubits. Therefore, synchronous triggering is required to be calibrated before each task starts (which may alternatively be understood as calibration of line delay). In order to achieve calibration of synchronous triggering of the signals, as shown in FIG. 3, the apparatus further includes a control module 170. The control module 170 is arranged in a socket of the backplane 120. The control module 170 is configured to acquire signal delay data of the at least one quantum state control module 140, the at least one frequency control module 150, and the at least one measurement module 160 via the backplane 120, and output the signal delay data. A central control apparatus arranged outside the control apparatus performs unified aggregation processing. For example, the central control apparatus may determine, based on delay data, delay of each module in obtaining the trigger signal, so as to coordinate signal delay of different modules, so that all modules obtain the trigger signal with equal delay.

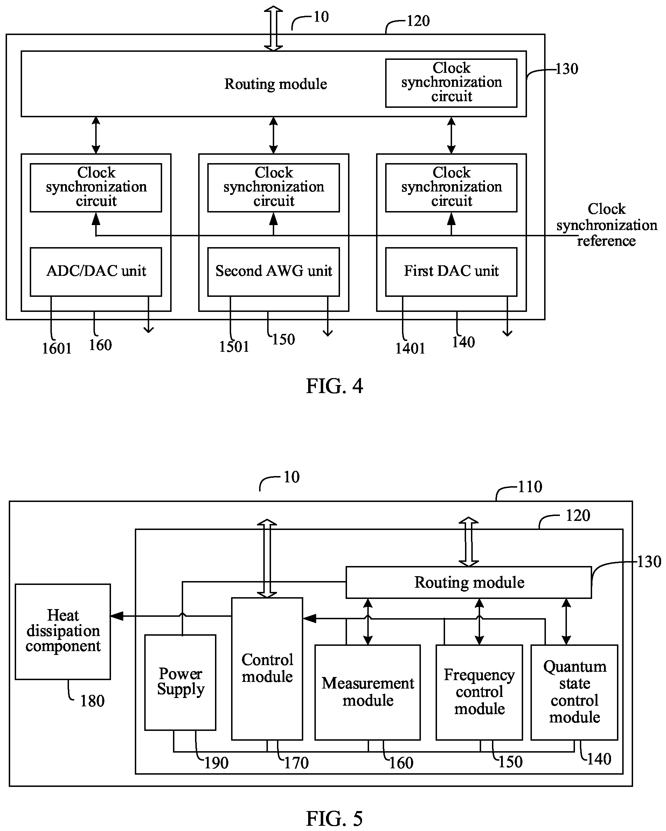

In addition, synchronous triggering may alternatively be ensured by clock synchronization between modules. As shown in FIG. 4, each of the quantum state control module 140, the frequency control module 150, the measurement module 160, the routing module 130 and the backplane 120 includes a clock synchronization circuit, and all the clock synchronization circuits use a same clock synchronization reference. The clock synchronization circuit on the backplane 120 serves as a clock synchronization master, the clock synchronization circuits on the quantum state control module 140, the frequency control module 150, the measurement module 160, and the routing module 130 serve as clock synchronization slaves, and the clock synchronization master manages each clock synchronization slave to perform clock synchronization control over the quantum state control module 140, the frequency control module 150, the measurement module 160, and the routing module 130. Through the clock synchronization control over each module in the control apparatus, timing of signal output may be effectively ensured to be synchronous.

As shown in FIG. 3, in some embodiments of the present disclosure, in order to ensure that each device in the control apparatus can operate stably and reliably, the control apparatus may further include a heat dissipation component 180. The heat dissipation component 180 is connected to the control module 170. The control module 170 receives temperature information from multiple parts in the control apparatus and sends a temperature control instruction to the heat dissipation component 180 according to the temperature information, to control the heat dissipation component 180 to operate in different states, so as to provide a better operating environment temperature for devices of the control apparatus, which also effectively prevents an influence of signal delay caused by a change in the operating environment temperature of the devices.

As shown in FIG. 5, in some embodiments of the present disclosure, the apparatus further includes a chassis 110, and the backplane 120, the quantum state control module 140, the frequency control module 150, the measurement module 160 and the routing module 130 are all arranged in the chassis 110. The entire control apparatus is assembled in one chassis 110, and thus occupies a small space and is easy to expand. Specifically, the chassis 110 may be a VPX chassis 110, a CPCI chassis 110, or a PXIE chassis 110, all of which can realize the quantum control functional requirement in terms of functional module integration. In addition, in order to further improve integration of the control apparatus, the quantum state control module 140, the frequency control module 150, the measurement module 160, and the routing module 130 may be integrated on one board, and each board may be plugged into the corresponding socket, thereby realizing integrated assembly between the quantum state control module 140, the frequency control module 150, the measurement module 160, and the routing module 130. For example, the quantum state control module 140 is a FPGA Mezzanine Card (FMC)-based DAC board, the frequency control module 150 is an FMC-based AWG board, and the measurement module 160 is an FMC-based ADC/DAC board.

In some embodiments of the present disclosure, the control apparatus may further include a power supply 190. The power supply 190 is arranged in the chassis 110. Specifically, the power supply 190 is integrated and assembled in a dedicated socket of the backplane 120. In some embodiments, the voltage source 190 is a linear power supply or a switching power supply.

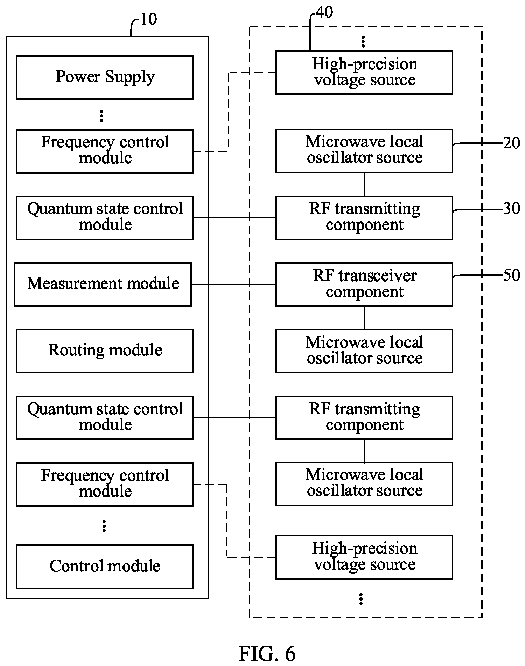

As shown in FIG. 6, some embodiments of the present disclosure further provide a quantum control system 1, including at least one quantum control apparatus as provided in the above embodiments and a plurality of auxiliary peripheral equipments. The auxiliary peripheral equipments are configured to cooperate with the control apparatus to generate the quantum state control signal, the frequency control signal, and the measurement signal, and receive the read feedback signal, thereby realizing the control and measurement operations on the qubits in the quantum chip. In this embodiment, the auxiliary peripheral equipments include, but are not limited to, microwave sources, high-precision voltage sources 40, microwave local oscillator sources 20, RF transmitting components 30, and RF transceiver components 50. A multi-channel quantum state control module 140, a microwave local oscillator source 20 and a multi-channel RF transmitting component 30 can generate a multi-channel quantum state control signal. A multi-channel frequency control module 150 and a multi-channel high-precision voltage source 40 can generate a multi-channel frequency control signal. A multi-channel measurement module 160, a microwave local oscillator source 20 and a multi-channel RF transceiver component 50 can generate a multi-channel measurement signal. Moreover, the measurement module 160 can receive a multi-channel read feedback signal through the multi-channel RF transceiver component 50. In addition, the microwave source may also be used in conjunction with the high-precision voltage source to generate a pump signal for a Josephson parametric amplifier (JPA). The JPA is connected to the third control signal line, and is configured to amplify the read feedback signal to ensure that the control apparatus acquires a highly accurate read feedback signal and ensure accuracy of the execution result of the quantum computing task.

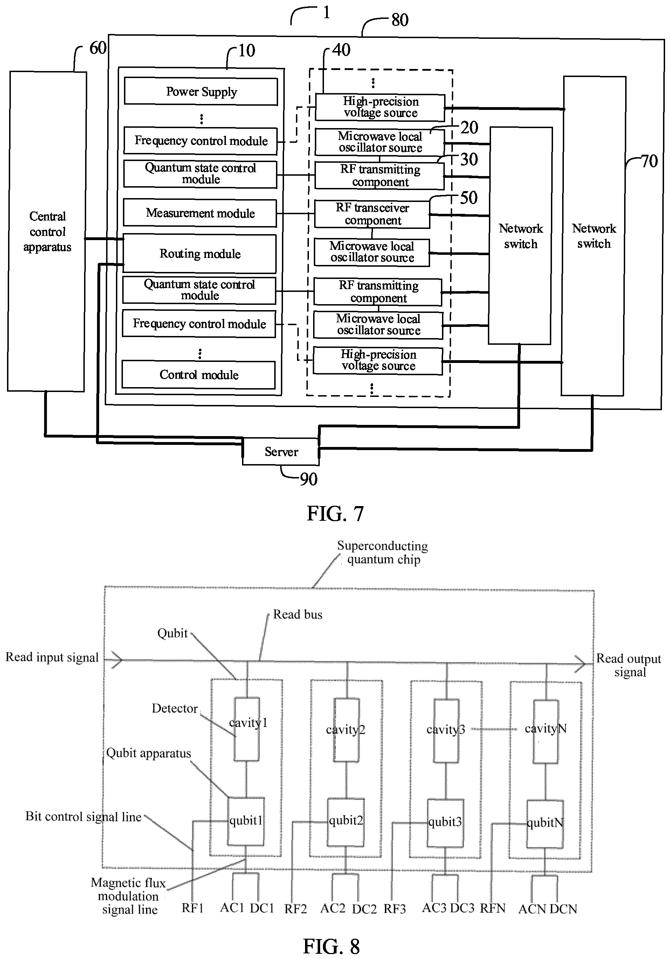

As shown in FIG. 7, in some embodiments of the present disclosure, the quantum control system 1 may further include at least one cabinet 80. The at least one control apparatus 10 and the plurality of auxiliary peripheral equipments are arranged in one cabinet 80. A number of the auxiliary peripheral equipments in each cabinet 80 is set according to requirements of the control apparatuses 10, to realize interaction with the quantum state control module 140, the frequency control module 150, the measurement module 160, and the routing module 130 of each control apparatus 10. In addition, the quantum control system 1 may further include at least one central control apparatus 60. The central control apparatus 60 is in communication connection with the routing module 130 of each control apparatus 10 in each cabinet 80, to realize a signal synchronous triggering function. A communication line thereof may be any one of a network switch, a high-frequency cable, and a direct network cable or combinations thereof.

In addition, the quantum control system 1 may further include a server 90. The server 90 may be a single server or a server cluster. The server cluster may be centralized or distributed. For example, the server 90 may be a distributed system. The server 90 is configured to generate and output a quantum computing task. The server 90 is in communication connection with the routing module 130 of each control apparatus 10 in each cabinet 80 and the central control apparatus 60. A communication line thereof may be any one of a network switch, a high-frequency cable, and a direct network cable or combinations thereof. In some embodiments, the quantum control system may further include at least one network switch 70. Each cabinet 80 is provided with at least one network switch 70. Each auxiliary peripheral equipment is in communication connection with the server 90 via the network switch 70.

As can be seen, as the number of the qubits on the quantum chip increases, the quantum control system may be expanded with the control apparatus 10 being a core control unit. The number of qubits that the control apparatus 10 can control and measure may alternatively be expanded as required. The quantum chip measurement and control function of the quantum control system 1 is realized by arranging the auxiliary peripheral equipment, the central control apparatus 60, and the network switch 70 as required in combination with the server 90. Therefore, the quantum control system dedicated to the quantum chip constructed has a greatly reduced volume and cost and has high integration and scalability, and the number of controlled qubits can be flexibly configured, such that measurement and control requirements of a high-quantum-bit quantum chip can be met.

Based on a same invention concept, some embodiments of the present disclosure further provide a quantum computer, including the quantum control system 1 above.

A quantum computer is a physical apparatus that performs high-speed mathematical and logical operations and stores and processes quantum information based on laws of quantum mechanics. A quantum chip is a core of a quantum computer. The quantum chip includes a plurality of qubits. In order to ensure normal operation of the qubits, a quantum control system is arranged to provide, by means of various devices in the quantum control system, various control signals for each qubit, such as a frequency control signal and a quantum state control signal. In addition, results of quantum computing performed on the qubits need to be read out and measured. In consideration of inevitable continuous expansion of the quantum chip, a core function required by quantum control system is required to be scalable. However, an existing quantum control system composed of commercial instruments has poor scalability, and the system has poor core performance and overall coordination.

To this end, embodiments of the present disclosure further provide a quantum control system and a quantum computer, which enables complete realization of high-precision measurement and control operations on superconducting quantum chips and has good system scalability and overall coordination.

Referring to FIG. 8, FIG. 8 shows an internal structure of a superconducting quantum chip according to an exemplary embodiment of the present disclosure. The superconducting quantum chip is provided with qubits and data transmission lines. Each qubit includes a detector and a qubit apparatus coupled to each other. The qubit apparatus is provided with a bit control signal line and a magnetic flux modulation signal line. The detector coupled to the qubit apparatus is provided with a read bus. The bit control signal line is used to transmit a quantum state control signal for adjusting quantum state information of the qubit apparatus. The magnetic flux modulation signal line is used to transmit a pulse signal for adjusting a frequency of the qubit apparatus. The read bus is used to transmit a measurement signal for measuring the detector and to output a read feedback signal fed back by the detector to realize indirect reading and measurement of a state of the qubit apparatus. The measurement signal for measuring the detector is a read input signal for reading qubits. The read feedback signal fed back by the detector is a read output signal for reading the qubits. Therefore, a quantum control system for control, read and measurement of qubits in the superconducting quantum chip is required to generate and output a quantum state control signal, a frequency control signal, and a read input signal which are respectively provided for the bit control signal line, the magnetic flux modulation signal line, and the read bus. At the same time, the read output signal for reading the qubits is required to be read from the read bus, to realize control, read and measurement of the qubits in the superconducting quantum chip.

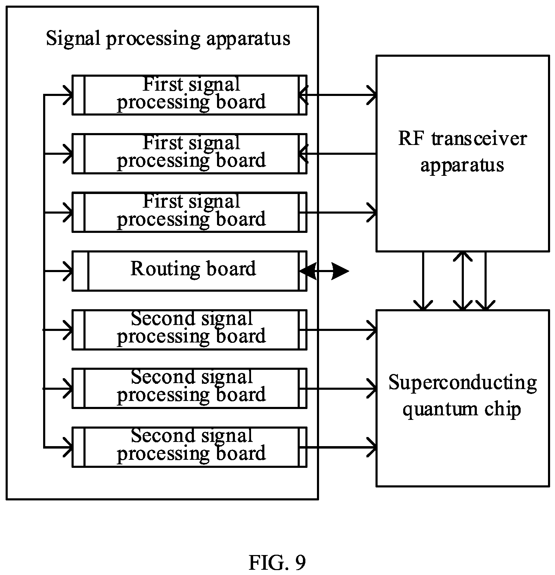

Referring to FIG. 9, FIG. 9 shows a quantum control system according to an exemplary embodiment of the present disclosure. The quantum control system includes at least one signal processing apparatus and at least one RF transceiver apparatus. Each of the at least one signal processing apparatus includes a first backplane, a plurality of first signal processing boards, a plurality of second signal processing boards and a routing board. The plurality of first signal processing boards, the plurality of second signal processing boards and the routing board are socketed to a backplane connector of the first backplane. The plurality of first signal processing boards and the plurality of second signal processing boards are all connected to the routing board. The plurality of second signal processing boards each are configured to generate a low-frequency signal. The at least one RF transceiver apparatus is connected to the first signal processing boards. The at least one RF transceiver apparatus cooperates with the plurality of first signal processing boards connected thereto to generate and receive a high-frequency signal. The first backplane, the plurality of first signal processing boards, the plurality of second signal processing boards and the routing board socketed to the backplane connector of the first backplane may form a measurement and control integrated backplane for a quantum chip.

The high-frequency signal and the low-frequency signal are used for manipulation, control and reading of qubits. Specifically, the high-frequency signal includes a quantum state control signal for controlling the qubits and a read input signal and a read output signal for reading the qubits, and the low-frequency signal includes a pulse signal for adjusting frequencies of qubits and/or a tunable coupler. Therefore, the quantum control system of the present disclosure has all the functions of qubit manipulation, control, reading and measurement. In some embodiments, the low-frequency signal may be a frequency control signal. In some embodiments, the high-frequency signal may be a quantum state control signal and a measurement signal.

Currently, in the architecture of the superconducting quantum chip based on a tunable coupler, in order to implement a two-bit quantum logic gate (referred to as "two-bit gate") operation between two qubits, indirect coupling of the two qubits is realized by using the tunable coupler. In this solution, the two qubits realize quantum state conversion through virtual photons in the tunable coupler, thereby realizing the two-bit quantum logic gate operation. An operating principle of the tunable coupler is that, by adjusting a frequency of the tunable coupler, a pulse signal for controlling a frequency of the tunable coupler is also transmitted to the corresponding magnetic flux modulation signal line. Therefore, for adjustment and reading of the qubits in the superconducting quantum chip based on the tunable coupler, the low-frequency signal generated by the second signal processing boards includes a pulse signal for controlling frequencies of the qubits and a pulse signal for controlling a frequency of the tunable coupler to meet functional requirements of different objects for frequency control, so that the quantum control system in the present disclosure has a wider scope of application.

In addition, the first signal processing boards, the second signal processing boards, and the routing board are all plugged into the backplane connector of the first backplane, and the core control functions of the quantum control system are realized using the plurality of first signal processing boards and the plurality of second signal processing boards in combination with the routing board.

Compared with the existing quantum control system composed of commercial instruments, the quantum control system of the present disclosure is more streamlined in structure and wiring complexity, and has high system integration. Through the cooperation between the signal processing apparatus and the RF transceiver apparatus, the first signal processing boards are connected to the RF transceiver apparatus, the RF transceiver apparatus cooperates with the first signal processing boards connected thereto to generate and receive high-frequency signals, and the second signal processing boards generate low-frequency signals. The high-frequency signals and the low-frequency signals are used for manipulation, control and reading of qubits, so that the quantum control system in the present disclosure has all the functions of qubit manipulation, control, reading and measurement. The routing board is provided with an external data interaction interface, all the first signal processing boards and the second signal processing boards perform external data interaction by means of the routing board, and the routing board performs unified deployment, which effectively improve overall coordination of the system, thereby enabling complete realization of high-precision measurement and control operations on superconducting quantum chips.

In some embodiments, still referring to FIG. 9, in the quantum control system in an exemplary embodiment of the present disclosure, the routing board is socketed to the backplane connector at a center of the first backplane. The plurality of first signal processing boards and the plurality of second signal processing boards are distributed on the first backplane with the routing board being a center. In this way, lengths of signal lines from the first signal processing boards and the second signal processing boards to the routing board are minimized, which effectively saves system costs and can effectively ensure minimization of signal line delay when data exchanged between the first signal processing boards, the second signal processing boards, and the routing board is transmitted on the signal lines.

As a unified deployment device for external data interaction between the first signal processing boards and the second signal processing boards, the routing board has data forwarding and processing functions and have high data transmission timeliness. Generally, a FPGA, a MCU, an MPU, a DSP, or the like may be selected. As specific implementations of the embodiments of the present disclosure, the routing module includes a FPGA. The FPGA is used as a central processing unit to ensure that the routing module has a high degree of functional integration and a high data processing speed. In addition, efficient and reliable interaction with data between the first signal processing boards, and the second signal processing boards may alternatively be realized by using a high-speed interface circuit.

In addition, the backplane connector is a high-speed signal transmission connector, such as a signal connector used by buses such as VPX, CPCI, and PXIe. A data transmission bandwidth may be as high as 10 Gb/s and may support a variety of parallel and serial transmission protocols, which can also effectively ensure timeliness of signal transmission on the signal processing apparatus to some extent.

It is to be noted that one signal processing apparatus and one RF transceiver apparatus are provided in FIG. 9. Three first signal processing boards and three second signal processing boards are provided. In practical applications, more signal processing apparatuses, more RF transceiver apparatuses, and more first signal processing boards and more second signal processing boards in the signal processing apparatuses may be provided as required, which are not limited herein. FIG. 9 is only a schematic diagram to facilitate those skilled in the art to better understand the technical solution of the present disclosure, and cannot be regarded as any limitation on the present disclosure.

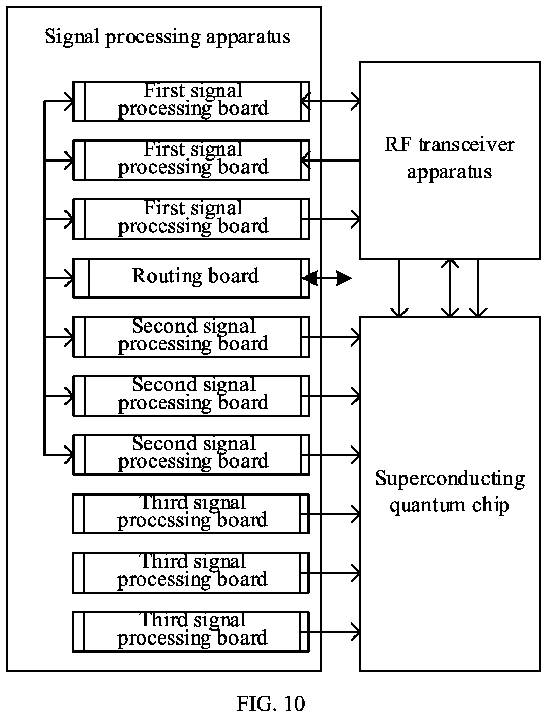

In some embodiments, output signals of the second signal processing boards may be directly provided with DC bias and may be directly used for controlling frequencies of qubits and/or a tunable coupler, which simplifies the system structure, improves reliability to some extent, and reduces system costs. However, upon the applicant's research, it has been found that, when low-frequency signals and DC signals are not used together for controlling the frequencies of the qubits and/or the tunable coupler, frequency control accuracy obtained is not ideal. Therefore, referring to FIG. 10, in the quantum control system according to an exemplary embodiment of the present disclosure, the signal processing apparatus further includes a plurality of third signal processing boards, the plurality of third signal processing boards are socketed to the backplane connector and configured to generate DC signals, and the DC signals include a frequency drive signal for controlling frequencies of qubits and/or a tunable coupler. For example, the frequency drive signal and the low-frequency signal for controlling the frequencies of the qubits and/or the tunable coupler are sent to the superconducting quantum chip through the magnetic flux modulation signal line. In addition, the number of the third signal processing boards may be set according to an actual application requirement, which is not limited herein.

In some embodiments, the plurality of first signal processing boards, the plurality of second signal processing boards, and the third signal processing board all have a plurality of signal output channels and/or a plurality of signal input channels. Each signal output channel may output one signal, and each signal input channel may input one signal. A number of signal output channels of each RF transceiver apparatus is no less than a sum of numbers of the signal output channels of the first signal processing boards connected to the RF transceiver apparatus. By increasing the number of the signal output channels and/or the signal input channels, the degree of integration of each signal processing apparatus is increased, and the number of qubits that the quantum control system can control, read and measure is also effectively increased, so as to meet measurement and control requirements of a high-quantum-bit quantum chip.

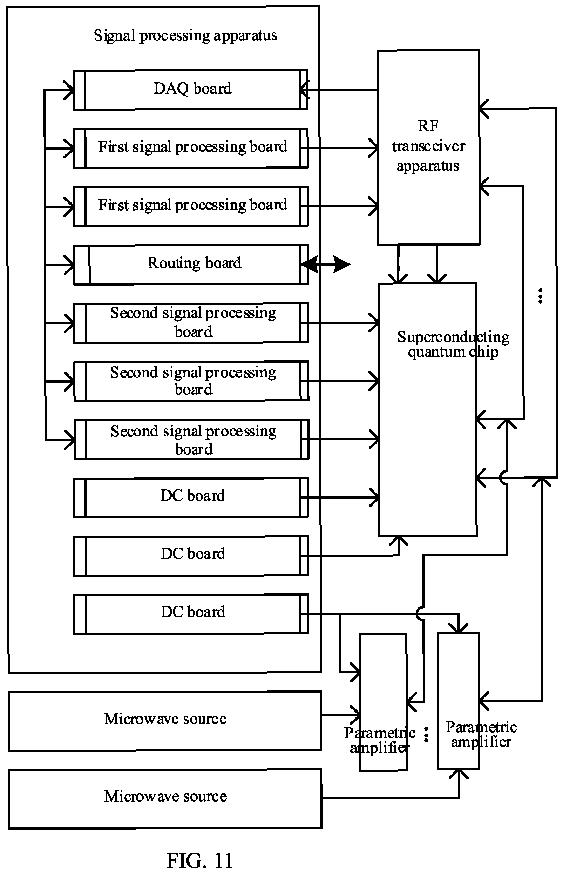

In some embodiments, referring to FIG. 11, the plurality of first signal processing boards include a first AWG board and a DAQ board. The first AWG board is configured to generate a low-frequency signal and transmit the low-frequency signal to the RF transceiver apparatus. The RF transceiver apparatus generates and outputs the high-frequency signal based on the low-frequency signal. The low-frequency signal includes an initial quantum state control signal and an initial read input signal. The high-frequency signal generated based on the low-frequency signal includes a quantum state control signal and a read input signal. Moreover, the RF transceiver apparatus receives the high-frequency signal outputted by the read bus, performs frequency conversion processing, and transmits the high-frequency signal to the DAQ board. The high-frequency signal outputted by the read bus is the read output signal. The DAQ board is configured to acquire a low-frequency signal generated based on frequency conversion of the read output signal. The low-frequency signal generated based on frequency conversion of the read output signal is an initial read output signal.

It is to be noted that the first AWG board includes a FPGA, which is designed and implemented using FPGA as a central processing unit. The first AWG board has a plurality of signal output channels. One signal output channel outputs one low-frequency signal for generating the quantum state control signal or the read input signal. The DAQ board has a plurality of signal input channels. One signal input channel receives one low-frequency signal generated based on frequency conversion of the read output signal. It is to be further noted that, in practical applications, the read bus may be in one-to-one correspondence to the detector. However, in order to simplify the structure of the data transmission line of the superconducting quantum chip, one read bus may be used to correspond to a plurality of detectors in the structural design of the superconducting quantum chip. For example, one read bus corresponds to five detectors, so that one read bus may be used to achieve reading and measurement of states of five qubit apparatuses.

In this case, one first AWG board and one DAQ board connected to one reading bus may be used to read and measure states of five qubits in the superconducting quantum chip. In this case, one signal output channel of the first AWG board outputs one initial read input signal, and one signal input channel of the DAQ board inputs one initial read output signal. Synthesis of the initial read input signal and decomposition of the initial read output signal do not belong to the content for which protection is sought by the present disclosure, which will not be introduced in detail herein.

It is to be noted that the first AWG board generates and outputs two types of low-frequency signals, the initial quantum state control signal and the initial read input signal, while the DAQ board only receives the initial read output signal. Therefore, at least two first AWG boards may be provided, and one DAQ board may be provided. In FIG. 11, two first AWG boards are provided, and one DAQ board is provided. In practical applications, more first AWG boards and more DAQ boards may be provided, which are not limited thereto. FIG. 11 is only a schematic diagram to facilitate those skilled in the art to better understand the technical solution of the present disclosure, and cannot be regarded as any limitation on the present disclosure.

In addition, the first signal processing board may further include an analog-to-digital/digital-to-analog convert (ADDA) board. A plurality of first AWG boards and one DAQ board are replaced with one ADDA board. On the one hand, the ADDA board is configured to generate a low-frequency signal and transmit the low-frequency signal to the RF transceiver apparatus, and the RF transceiver apparatus generates and outputs the read input signal. On the other hand, the ADDA board is configured to acquire a low-frequency signal generated by the RF transceiver apparatus after frequency conversion processing of the read output signal. The ADDA board has a plurality of signal input channels and a plurality of signal output channels.

In some embodiments, still referring to FIG. 11, the second signal processing boards include a second AWG board. The second AWG board is configured to generate the low-frequency signal. The low-frequency signal includes a pulse signal for controlling frequencies of the qubits and/or a tunable coupler. The second AWG board includes a FPGA, which is designed and implemented using FPGA as a central processing unit.

In some embodiments, still referring to FIG. 11, the third signal processing boards include a DC board. The DC board is configured to generate the DC signal. The DC board has a plurality of signal input channels and/or a plurality of signal output channels. One signal output channel outputs one DC signal. The DC board has a function of a high-precision voltage source.

In some embodiments, each read bus of the superconducting quantum chip is provided with one parametric amplifier configured to amplify the read output signal, thereby realizing high-fidelity reading of qubit state information. Still referring to FIG. 11, the quantum control system further includes a plurality of multi-channel microwave sources. Microwave signals generated by the plurality of multi-channel microwave sources are used to drive a pump signal of the parametric amplifier. One channel of the microwave source outputs one microwave signal. One microwave signal may be used to drive one parametric amplifier. In addition, the DC signals generated by the third signal processing boards further include a frequency control signal for the parametric amplifier, to modulate an operating frequency of the parametric amplifier to an appropriate frequency position. For example, the parametric amplifier may be a JPA, an impedance matching parametric amplifier, or the like.

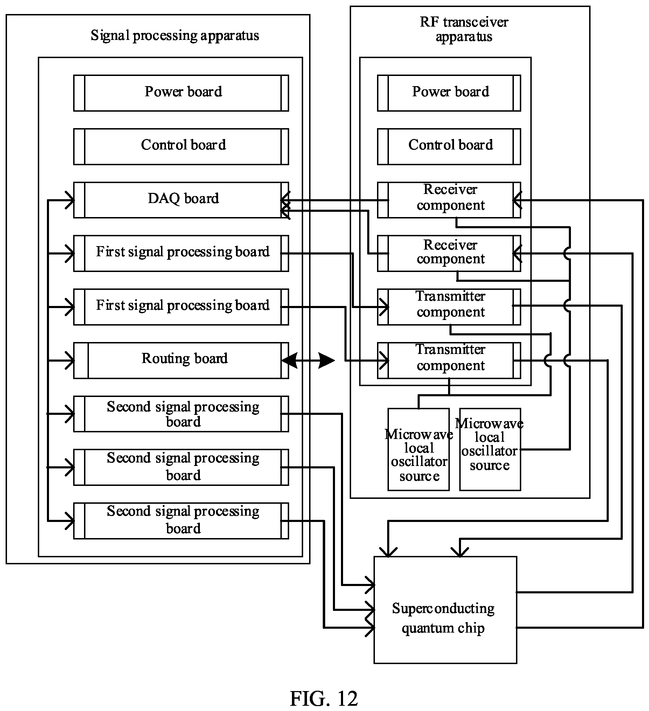

In some embodiments, referring to FIG. 12, each RF transceiver apparatus includes a plurality of RF transmitting components, a plurality of RF receiving components and a plurality of microwave local oscillator sources. The plurality of RF transmitting components are connected to the first signal processing boards and the plurality of microwave local oscillator sources and configured to generate the high-frequency signal. The plurality of RF receiving components are connected to the plurality of first signal processing boards and the plurality of microwave local oscillator sources and configured to perform frequency conversion processing on a received high-frequency signal and then transmit the high-frequency signal to the plurality of first signal processing boards. For example, each RF transmitting component is connected to one first AWG board, and the low-frequency signal outputted by the first AWG board and the microwave signal outputted by the microwave local oscillator source generate the high-frequency signal in the RF transmitting component. The high-frequency signal includes the quantum state control signal and the read input signal. The low-frequency signal includes the initial quantum state control signal and the initial read input signal.

The RF receiving component is connected to the DAQ board, and the high-frequency signal is received by the RF receiving component and combined with the microwave signal outputted by the microwave local oscillator source for frequency conversion processing in the RF receiving component to form a low-frequency signal. The DAQ board acquires the low-frequency signal generated by the RF receiving component. The high-frequency signal is the read output signal. The low-frequency signal is the initial read output signal. For example, the RF transmitting component uses a secondary frequency conversion technology or an IQ mixing technology to generate the high-frequency signal. The RF receiving component uses the secondary frequency conversion technology or the IQ mixing technology to perform frequency conversion processing on the received high-frequency signal.

In some embodiments, the plurality of RF transmitting components and the plurality of RF receiving components each include an IQ mixer. The plurality of RF transmitting components and the plurality of RF receiving components each include a plurality of signal output channels and/or a plurality of signal input channels. One signal input channel or one signal output channel of the plurality of RF transmitting components and the plurality of RF receiving components is provided with the IQ mixer. For example, an output port of the first AWG board is connected to an I port and a Q port of the IQ mixer of the RF transmitting component, the microwave local oscillator source is connected to an LO port of the IQ mixer of the RF transmitting component, and input ports of the bit control signal line and the read bus are connected to an RF port of the IQ mixer of the RF transmitting component. The low-frequency signal outputted by the first AWG board and the microwave signal outputted by the microwave local oscillator source are mixed in the IQ mixer of the RF transmitting component to generate the high-frequency signal. An input port of the DAQ board is connected to an I port and a Q port of the IQ mixer of the RF receiving component, the microwave local oscillator source is connected to an LO port of the IQ mixer of the RF receiving component, and an output port of the read bus is connected to an RF port of the IQ mixer of the RF receiving component. The high-frequency signal outputted by the read bus and the microwave signal outputted by the microwave local oscillator source are mixed in the IQ mixer of the RF receiving component to generate the low-frequency signal.

In some embodiments, in order to reduce the system costs, the microwave local oscillator source may be a microwave point frequency source, and the microwave point frequency source can output a plurality of microwave point frequency signals. In order to increase system integration, the microwave local oscillator source may be a tunable local oscillator frequency source.

In some embodiments, still referring to FIG. 12, in order to further improve the system integration and scalability, each of the at least one RF transceiver apparatus further includes a second backplane, and the plurality of RF transmitting components and the plurality of RF receiving components of each RF transceiver apparatus are all socketed to a backplane connector of the second backplane.

In some embodiments, still referring to FIG. 12, in order to further improve the system integration and scalability, the first backplane and the second backplane are both provided with a control board and a power board. The control board on the first backplane is connected to the plurality of first signal processing boards, the plurality of second signal processing boards, and the routing board, functions of the control board include, but are not limited to, monitoring an operating environment temperature of the signal processing apparatus, and the power board on the first backplane supplies power to the first backplane and devices on the first backplane. The control board on the second backplane is connected to the plurality of RF transmitting components and the plurality of RF receiving components, functions of the control board include, but are not limited to, monitoring an operating environment temperature of the RF transceiver apparatus, and the power board on the second backplane supplies power to the second backplane and devices on the second backplane.

In some embodiments, still referring to FIG. 12, in order to further improve the system integration and scalability, the quantum control system further includes a plug-in chassis. Each first backplane and each second backplane are respectively installed in one plug-in chassis. The signal processing apparatus based on the first backplane and the RF transceiver apparatus based on the second backplane are respectively assembled in one plug-in chassis, so that the quantum control system takes up little space and is easy to expand. Specifically, the plug-in chassis may be a chassis with a high-speed signal transmission function such as a VPX chassis, a CPCI chassis, or a PXIE chassis, all of which can realize the quantum control functional requirement in the embodiments of this application in terms of functional module integration.

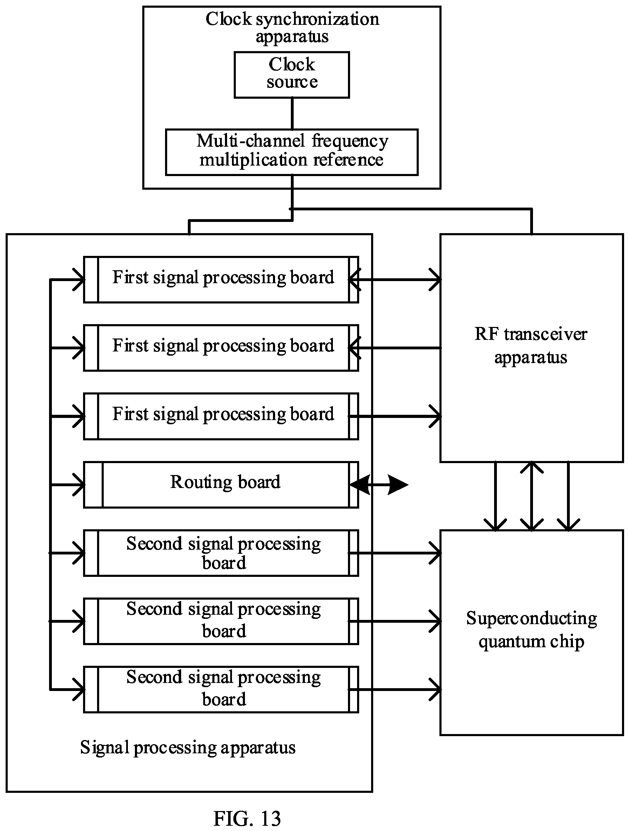

In some embodiments, referring to FIG. 13, the quantum control system further includes a clock synchronization apparatus configured to provide a same reference clock for each signal processing apparatus and each RF transceiver apparatus. In addition, the arrangement of the clock synchronization apparatus can further realize a function to some extent that output signals of the signal processing apparatus and the RF transceiver apparatus have a same phase.

For example, still referring to FIG. 13, the clock synchronization apparatus includes a clock source and at least one multi-channel frequency multiplication reference. The clock source provides a reference clock signal for each multi-channel frequency multiplication reference. Each multi-channel frequency multiplication reference is connected to one signal processing apparatus and one RF transceiver apparatus, to send a same multi-channel reference clock signal to each signal processing apparatus and each RF transceiver apparatus. A same reference clock is provided for the signal processing apparatus and the RF transceiver apparatus, so that the first signal processing boards, the second signal processing boards, the routing board and the RF transceiver apparatus have operating clocks with a same starting time point. For example, the clock source may be a high-precision rubidium clock. A reference clock signal of 10 MHz is generated by using the rubidium clock. The multi-channel frequency multiplication reference performs frequency multiplication processing of 5 times, 10 times, 20 times or even more according to an actual application requirement and then outputs the same multi-channel reference clock signal.

For a quantum computing task required to be performed in a quantum computer, as types and complexity of the quantum computing task increase, a number of qubits required to participate is also increasing. That is, the quantum control systems have more and more output channels. For a complex quantum computing task required to be performed, a plurality of initial quantum state control signals and a plurality of initial frequency control signals are required. That is, the plurality of first signal processing board and the plurality of second signal processing boards are required to operate together, and signals outputted by all the modules operating together are required to be triggered synchronously to accurately complete the quantum computing task.

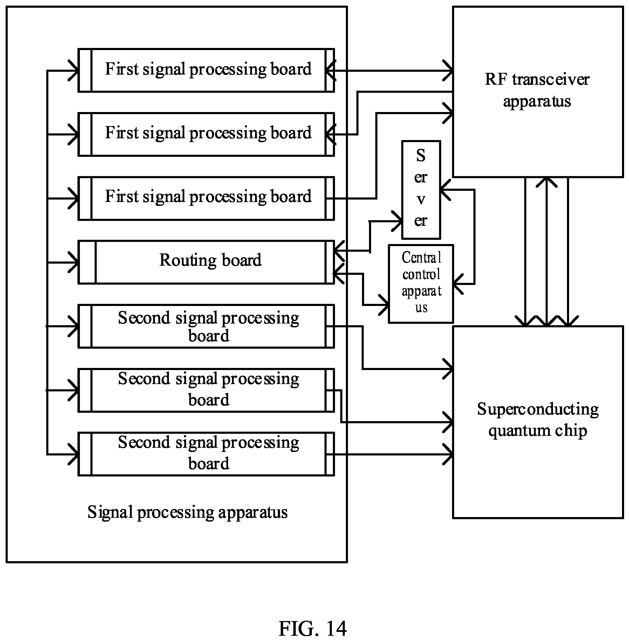

In some embodiments, referring to FIG. 14, in order to realize synchronous triggering of the signals outputted by the plurality of first signal processing board and the plurality of second signal processing boards, the quantum control system further includes a central control apparatus, all the routing boards are connected to the central control apparatus, and the central control apparatus is configured to synchronously control the plurality of first signal processing boards and the plurality of second signal processing boards by means of the routing board.

In addition, signal lines dedicated to signal trigger synchronization control are provided between the routing board and the first signal processing board and between the routing board and the second signal processing board. The routing board transmits, through the signal lines dedicated to signal synchronous triggering control, synchronization control instructions to realize signal trigger synchronization control between the first signal processing boards and between the second signal processing boards. The central control apparatus sends a trigger instruction to each routing board, and the routing board sends, through the signal lines dedicated to signal synchronous triggering control, synchronization control instructions such that the plurality of first signal processing boards or the plurality of second signal processing boards operate synchronously. In addition, in order to ensure that line delay of signals on the signal lines dedicated to signal trigger synchronization control is equal, the signal lines dedicated to signal trigger synchronization control between the routing board and the first signal processing board and between the routing board and the second signal processing board are further equal in length. Therefore, signal synchronization performance of the quantum control system is greatly improved, which is conducive to realizing high-precision execution of large-scale quantum computing tasks.

In some embodiments, still referring to FIG. 14, the quantum control system further includes a server communicated with the central control apparatus and/or the routing board. Information interaction between the central control apparatus and the server includes, but is not limited to, the synchronization control instructions. Information interaction between the routing board and the server includes, but is not limited to, quantum computing task data.

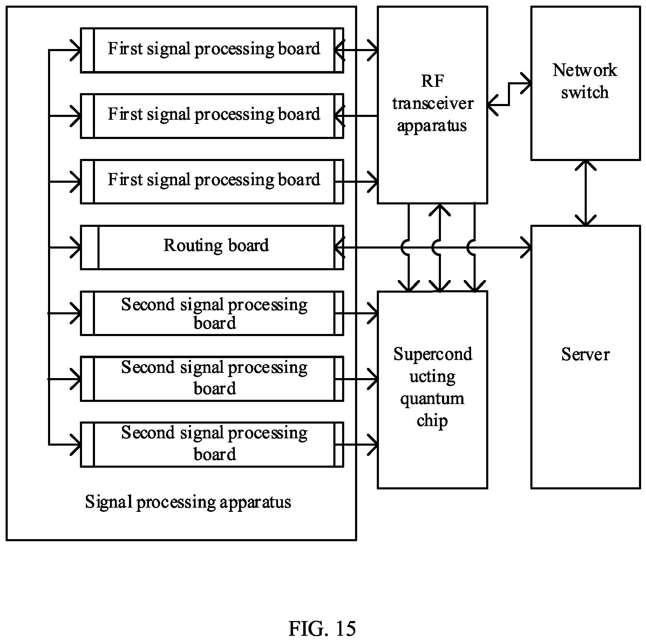

In some embodiments , referring to FIG. 15, the quantum control system further includes a server and a network switch, and each of the at least one RF transceiver apparatus communicates with the server by means of the network switch, and the routing board communicates with the server. Information interaction between the RF transceiver apparatus and the server includes, but is not limited to, control over an operating state of the RF receiving apparatus. In addition, the DC board and the clock synchronization apparatus also communicate with the server through the network switch.

Based on a same invention concept, some embodiments of the present disclosure further provide a quantum computer, including the quantum control system above.

A quantum computer is a physical apparatus that performs high-speed mathematical and logical operations and stores and processes quantum information based on laws of quantum mechanics. The quantum computer is featured mainly with a high running speed, a strong capability to process information, a wide range of applications, and the like. Compared with ordinary computers, if more information is processed, it is more advantageous for the quantum computer to perform calculations, and accuracy of the calculations can be better ensured.

A quantum chip in a quantum computer is like a CPU in a conventional computer. The quantum chip is a core component of the quantum computer. The quantum chip is provided with a plurality of qubits. In order to ensure normal operation of the qubits, a dedicated quantum measurement and control system is required to be built. The quantum measurement and control system is provided with a plurality of functional modules to realize quantum computing based on the qubits, and the plurality of functional modules are integrated on the backplane. As research on quantum computing-related technologies continues to advance, a number of qubits on the quantum chip may also gradually increase. When the number of qubits on the quantum chip increases to hundreds or even tens of millions and more and more complex quantum computing tasks are performed, a number of the functional modules integrated on the backplane may also increase accordingly, which makes it more difficult to control the selection of different functional modules and is prone to errors. Therefore, how to realize accurate control over the selection of different functional modules on the backplane is an urgent problem.

To this end, embodiments of the present disclosure further provides a quantum control apparatus and a quantum control system, so as to solve the defects and deficiencies in the prior art. According to the present disclosure, the selection of different functional modules on the backplane can be accurately controlled.

The present disclosure provides a quantum control device and a quantum control system. The switch module and the microcontroller are additionally provided. The switch module selects an operating channel of the microcontroller, then the control signal is outputted from the selected operating channel to the measurement and control integrated backplane, and the measurement and control integrated backplane enters the corresponding operating mode based on the control signal, thereby achieving accurate control and free control over the operating mode of the measurement and control integrated backplane.

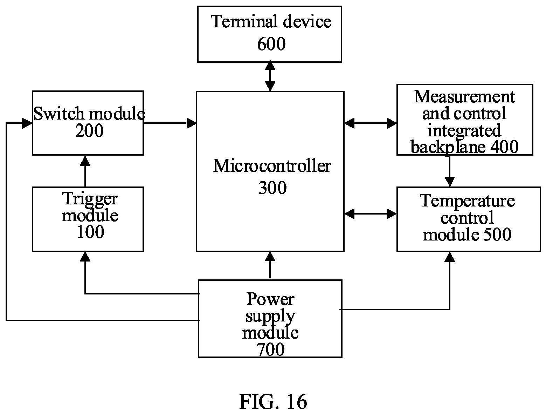

To this end, the present disclosure provides a quantum control apparatus configured to control a measurement and control integrated backplane of a quantum chip. Referring to FIG. 16, the quantum control apparatus includes a trigger module 100, a switch module 200 and a microcontroller 300. The trigger module 100 is electrically connected to the switch module 200 and is configured to output a trigger signal to the switch module 200. The switch module 200 is electrically connected to the microcontroller 300 and is configured to select an operating channel of the microcontroller 300 based on the trigger signal. The microcontroller 300 is configured to set a corresponding control signal according to the selected operating channel and output the control signal to the measurement and control integrated backplane. In this embodiment, in specific applications, the microcontroller is 300 connected to a control port of the measurement and control integrated backplane 400. After receiving the control signal, the measurement and control integrated backplane 400 may enter a corresponding operating mode based on the control signal. The control signal is used to control the measurement and control integrated backplane 400 to enter the corresponding operating mode. In some embodiments, the measurement and control integrated backplane 400 may be the measurement and control integrated backplane provided in the above embodiments of the present disclosure.

In view of the above, in this embodiment, instead of directly controlling the selection of the operating mode of the measurement and control integrated backplane 400 through the microcontroller 300, the switch module 200 is additionally provided. Specifically, the switch module 200 selects an operating channel of the microcontroller 300, thereby completing the control of the microcontroller 300 over the operating mode of the measurement and control integrated backplane 400 via the selected operating channel. In this way, when the measurement and control integrated backplane 400 is controlled, a control manner may be edited arbitrarily. For example, the timing selection of the operating mode of the measurement and control integrated backplane 400 is achieved by setting a time interval for the trigger module 100 to output the trigger signal to the switch module 200. In another example, the operating mode of the measurement and control integrated backplane 400 may be restarted and switched by setting a wiring channel of the switch module 200. The wiring channel of the switch module 200 generally includes two wiring channels, namely, a ground wire of the switch module 200 and a wire connecting the switch module 200 to the trigger module 100.

In some embodiments, the microcontroller 300 is an STM series chip, an STC series chip or an ARM series chip.

For example, the measurement and control integrated backplane 400 includes a plurality of functional boards, and the switch module 200 includes a plurality of self-locking non-reset switches. One self-locking non-reset switch is used to control power on and power off of the entire backplane of the measurement and control integrated backplane 400, and the remaining self-locking non-reset switches are used to respectively control power on and power off of the functional boards on the measurement and control integrated backplane 400, to control the measurement and control integrated backplane 400 to enter different operating modes.

In some embodiments, the self-locking non-reset switches control reset (i.e., power on and power off) of the functional boards on the measurement and control integrated backplane 400 through the microcontroller 300 in the following two resetting manners, namely, hot reset and cold reset. When a set of general-purpose input and output pins of the microcontroller 300 are connected to enable pins of switching power supply chips of the functional boards, the functional boards are automatically reset from power off to power on, that is, cold reset. When the set of general-purpose input and output pins of the microcontroller 300 are connected to enable pins of main power supply chips of the functional boards, the function boards are reset after receiving a reset signal when the function boards are powered on, that is, hot reset. In this way, when the measurement and control integrated backplane 400 fails, the functional modules on the measurement and control integrated backplane 400 can be freely cold reset or hot reset through the switch module 200. In some embodiments, the self-locking non-reset switches are toggle switches.

In some embodiments, the quantum control apparatus further includes a first output module (not shown) electrically connected to the microcontroller 300 and configured to forward the control signal to the measurement and control integrated backplane 400. Specifically, the first output module includes connection ports for connecting to the functional boards on the measurement and control integrated backplane 400. In practical applications, the operating mode of the measurement and control integrated backplane 400 can be controlled by connecting the quantum control apparatus to the connection ports of the functional boards on the measurement and control integrated backplane 400 through the first output module. Therefore, the quantum control apparatus provided in this embodiment is simple to assemble and highly integrated and occupies a small space.

For example, the quantum control apparatus further includes a temperature control module 500. The temperature control module 500 is electrically connected to the microcontroller 300 and the measurement and control integrated backplane 400 respectively and configured to monitor a real-time temperature of the measurement and control integrated backplane 400 and adjust in real time the temperature of the measurement and control integrated backplane 400 according to a target temperature.

Specifically, the temperature control module 500 includes a plurality of temperature sensors and a plurality of heat sinks, and the plurality of temperature sensors and the plurality of heat sinks are electrically connected to the microcontroller 300 respectively. The plurality of temperature sensors are arranged on the measurement and control integrated backplane 400 respectively, and are configured to detect the real-time temperature of the measurement and control integrated backplane 400 and transmit temperature data to the microcontroller 300. The plurality of heat sinks are configured to receive the temperature adjust signal sent by the microcontroller 300 and adjust in real time the temperature of the measurement and control integrated backplane 400 based on the temperature adjust signal and the target temperature. Specifically, the temperature sensors are respectively arranged on the measurement and control integrated backplane 400 close to a main heat source to ensure accuracy of the real-time temperature detected by the temperature sensors.

In some embodiments, the heat sinks are silent fans with a speed adjustment function. Specifically, in applications, a number of silent fans is the same as that of the temperature sensors. The corresponding temperature adjust signal is specifically a signal for adjusting speeds of the silent fans. After receiving the temperature adjust signal, the silent fans adjust respective speeds accordingly to adjust a real-time temperature of the measurement and control integrated backplane 400. Specifically, closed-loop adjustment is performed on the silent fans based on the temperature adjust signal. When the real-time temperature is significantly different from the target temperature, the speeds of the silent fans are increased. When the real-time temperature and the target temperature are slightly different or the same, the speeds of the silent fans are reduced or constant to reduce noise of the silent fans and prolong the service life of the silent fans.

In some embodiments, the quantum control apparatus further includes a second output module (not shown) and a terminal device 600 in communication connection with each other. The second output module is electrically connected to the microcontroller 300 and is configured to upload operating state information of the microcontroller 300, the switch module 200, the measurement and control integrated backplane 400 and the temperature control module 500 to the terminal device 600. The terminal device 600 is configured to receive the operating state information of the microcontroller 300, the switch module 200, the measurement and control integrated backplane 400 and the temperature control module 500 and monitor operating states thereof to achieve remote monitoring and control over the operating states thereof. In some embodiments, the second output module establishes communication with the terminal device using at least one of a WIFI module, an Ethernet interface, a type-c interface or a 4G module. The terminal device 600 includes one or more of a computer, a mobile phone and a multimedia playback device.

For example, the quantum control apparatus further includes a power supply module 700. The power supply module 700 is configured to supply power to the microcontroller 300, the switch module 200, the trigger module 100 and the temperature control module 500.

Based on a same invention concept, this disclosure further provides a quantum control system. The quantum control system includes the quantum control apparatus in FIG. 16.

Based on a same invention concept, this disclosure further provides a quantum computer including the quantum control apparatus in FIG. 16, or a quantum control system including the quantum control apparatus in FIG. 16.

Based on the above, the quantum control apparatus shown in FIG. 16, the quantum control system including the quantum control apparatus shown in FIG. 16, and the quantum computer provided in the present disclosure have the following advantages. The quantum control apparatus includes a trigger module, a switch module and a microcontroller. The trigger module is electrically connected to the switch module and is configured to output a trigger signal to the switch module. The switch module is electrically connected to the microcontroller and is configured to select an operating channel of the microcontroller based on the trigger signal. The microcontroller is configured to set a corresponding control signal according to the selected operating channel and output the control signal to the measurement and control integrated backplane. In this embodiment, in specific applications, the microcontroller is connected to a control port of the measurement and control integrated backplane. After receiving the control signal, the microcontroller may enter a corresponding operating mode based on the control signal. The control signal is used to control the measurement and control integrated backplane to enter the corresponding operating mode. According to the present disclosure, the switch module and the microcontroller are additionally provided. The switch module selects an operating channel of the microcontroller, then the control signal is outputted from the selected operating channel to the measurement and control integrated backplane, and the measurement and control integrated backplane enters the corresponding operating mode based on the control signal, thereby achieving accurate control and free control over the operating mode of the measurement and control integrated backplane.

In the description of the specification, reference terms such as "an embodiment", "some embodiments", "examples", and "specific examples" mean that a particular feature, structure, material, or characteristic described in connection with the embodiment or example is included in at least one embodiment or example of the present disclosure. In the specification, the schematic expressions to the above terms are not necessarily referring to the same embodiment or example. Moreover, the particular feature, structure, material, or characteristic described may be combined in one or more embodiments in any appropriate manner. In addition, those skilled in the art may combine and combine different embodiments or examples described in this specification.

The above are only preferred embodiments of the present disclosure, and do not limit the present disclosure in any way. Any equivalent replacement or modification made by any person skilled in the art to the technical solution and the technical content disclosed in the present disclosure without departing from the scope of the technical solution of the present disclosure does not depart from the content of the technical solution of the present disclosure and still falls within the protection scope of the present disclosure.

## Claims

1. A quantum control apparatus, comprising:
a backplane;
a routing module;
at least one quantum state control module;
at least one frequency control module; and
at least one measurement module,
wherein the at least one quantum state control module, the at least one frequency control module, the at least one measurement module, and the routing module are arranged in respective sockets of the backplane to form a measurement and control integrated backplane for a quantum chip, and
wherein the at least one quantum state control module, the at least one frequency control module, and the at least one measurement module are all in communication connection with the routing module, and perform data interaction by means of the routing module, so that the at least one quantum state control module outputs an initial quantum state control signal, the at least one frequency control module outputs an initial frequency control signal, and the at least one measurement module outputs an initial measurement signal.

2. The quantum control apparatus according to claim 1, wherein a number of qubits controlled by the quantum state control module and the frequency control module is greater than or equal to a number of qubits read and measured by the measurement module.

3. The quantum control apparatus according to claim 2, wherein each of the quantum state control module, the frequency control module, and the measurement module comprises a plurality of output channels.

4. The quantum control apparatus according to claim 3, wherein the quantum state control module comprises a first digital-to-analog converter, DAC, or a first arbitrary waveform generator, AWG, the frequency control module comprises a second DAC or a second AWG, the measurement module comprises an analog-to-digital/digital-to-analog converter, ADC/DAC, or comprises a third ADC, or comprises a third AGW and a data acquisition, DAQ, unit, and the routing module comprises a field programmable gate array, FPGA.

5. The quantum control apparatus according to claim 1, wherein the at least one quantum state control module, the at least one frequency control module, and the at least one measurement module are arranged in the sockets of the backplane and distributed with the routing module being a center.

6. The quantum control apparatus according to claim 5, wherein the routing module are connected to the at least one quantum state control module, the at least one frequency control module and the at least one measurement module via trigger signal transmission lines respectively, and the trigger signal transmission lines are equal in length.

7. The quantum control apparatus according to claim 6, wherein the routing module is arranged at a center of the backplane, and each of the at least one measurement module is arranged next to the routing module.

8. The quantum control apparatus according to claim 1, further comprising a control module arranged in a socket of the backplane, wherein the control module is configured to acquire signal delay data and output the signal delay data externally, wherein the signal delay data is acquired from the at least one quantum state control module, the at least one frequency control module and the at least one measurement module.

9. The quantum control apparatus according to claim 1, further comprising a heat dissipation component connected to a control module, wherein the control module sends a temperature control instruction to the heat dissipation component according to temperature information in the quantum control apparatus, to control the heat dissipation component to operate in different states.

10. The quantum control apparatus according to claim 1, wherein each of the quantum state control module, the frequency control module, the measurement module, the routing module and the backplane comprises a clock synchronization circuit, and all the clock synchronization circuits use a same clock synchronization reference for clock synchronization control over the quantum state control module, the frequency control module, the measurement module and the routing module.

11. The quantum control apparatus according to any one of claims 1 to 10, further comprising a chassis, where the backplane, the quantum state control module, the frequency control module, the measurement module and the routing module are all arranged in the chassis.

12. The quantum control apparatus according to claim 11, further comprising a power supply arranged in the chassis.

13. A quantum control system, comprising at least one quantum control apparatus according to any one of claims 1 to 12.

14. The quantum control system according to claim 13, further comprising an auxiliary peripheral equipment, wherein the auxiliary peripheral equipment comprises a plurality of microwave local oscillator sources, a radio frequency, RF, transmitting component, an RF transceiver component and a voltage source,
the plurality of microwave local oscillator sources and the RF transmitting component cooperate with the quantum control apparatus to generate a quantum state control signal for adjusting quantum state information of qubits, the voltage source cooperates with the quantum control apparatus to generate a frequency control signal for adjusting frequencies of the qubits, and the plurality of microwave local oscillator sources and the RF transceiver component cooperate with the quantum control apparatus to generate a measurement signal for reading states of the qubits and receive a read feedback signal from the quantum chip.

15. The quantum control system according to claim 14, further comprising a plurality of microwave sources, wherein the plurality of microwave sources cooperate with the voltage source to generate a pump signal for driving a Josephson parametric amplifier.

16. The quantum control system according to claim 15, further comprising at least one central control apparatus, wherein the at least one central control apparatus is in communication connection with the routing module.

17. The quantum control system according to claim 16, further comprising a server, wherein the central control apparatus, the auxiliary peripheral equipment and the routing module of the quantum control apparatus are all in communication connection with the server.

18. A quantum control system, comprising:
at least one signal processing apparatus, each comprising a first backplane, a plurality of first signal processing boards, a plurality of second signal processing boards and a routing board, wherein the plurality of first signal processing boards, the plurality of second signal processing boards and the routing board are socketed to a backplane connector of the first backplane to form a measurement and control integrated backplane for a quantum chip, the plurality of first signal processing boards and the plurality of second signal processing boards are all connected to the routing board, the plurality of second signal processing boards each are configured to generate a low-frequency signal, and the low-frequency signal is a frequency control signal; and
at least one RF transceiver apparatus in communication connection with the first signal processing boards by means of the routing board, wherein the at least one RF transceiver apparatus cooperates with the plurality of first signal processing boards in communication connection therewith to generate and receive a high-frequency signal, and the high-frequency signal comprises a quantum state control signal and a measurement signal.

19. The quantum control system according to claim 18, wherein each of the plurality of first signal processing boards and the plurality of second signal processing boards comprises a plurality of signal output channels and/or a plurality of signal input channels, and a number of signal output channels of each RF transceiver apparatus is no less than a sum of numbers of the signal output channels of the first signal processing boards connected to the RF transceiver apparatus.

20. The quantum control system according to claim 19, wherein the routing board is socketed to the backplane connector at a center of the first backplane.

21. The quantum control system according to claim 18, wherein the high-frequency signal comprises a measurement signal and a quantum state control signal for controlling qubits, and the measurement signal comprises a read output signal and a read input signal for reading the qubits,
or the plurality of first signal processing boards comprise a first arbitrary waveform generator, AWG, board and a data acquisition, DAQ, board,
or the low-frequency signal comprises a pulse signal for controlling frequencies of the qubits and/or a tunable coupler,
or the plurality of second signal processing boards comprise: a second AWG board configured to generate the low-frequency signal.

22. The quantum control system according to claim 18, wherein the signal processing apparatus further comprises a plurality of third signal processing boards, the plurality of third signal processing boards are configured to generate direct current, DC, signals, and the DC signals comprise a frequency drive signal for controlling frequencies of qubits and/or a tunable coupler,
or the plurality of third signal processing boards comprise a DC source board,
or the quantum control system further comprises a plurality of multi-channel microwave sources,
microwave signals generated by the plurality of multi-channel microwave sources are used to drive a pump signal of a parametric amplifier, and
the DC signals generated by the plurality of third signal processing boards further comprise a frequency control signal for the parametric amplifier.

23. The quantum control system according to claim 18, wherein each of the at least one RF transceiver apparatus comprises a plurality of RF transmitting components, a plurality of RF receiving components and a plurality of microwave local oscillator sources,
the plurality of RF transmitting components are connected to the first signal processing boards and the plurality of microwave local oscillator sources and configured to generate the high-frequency signal,
the plurality of RF receiving components are connected to the plurality of first signal processing boards and the plurality of microwave local oscillator sources and configured to perform frequency conversion processing on a received high-frequency signal and then transmit the high-frequency signal to the plurality of first signal processing boards,
or the plurality of RF transmitting components and the plurality of RF receiving components each comprise an in-phase/quadrature, IQ, mixer,
or the plurality of microwave local oscillator sources each comprise a microwave point frequency source or a tunable local oscillator frequency source,
or each of the at least one RF transceiver apparatus further comprises a second backplane, and the plurality of RF transmitting components and the plurality of RF receiving components of each of the at least one RF transceiver apparatus are all socketed to a backplane connector of the second backplane,
or the first backplane and the second backplane are both provided with a control board and a power board,
the control board on the first backplane is connected to the plurality of first signal processing boards, the plurality of second signal processing boards, and the routing board, and the power board on the first backplane supplies power to the first backplane and devices on the first backplane, and
the control board on the second backplane is connected to the plurality of RF transmitting components and the plurality of RF receiving components, and the power board on the second backplane supplies power to the second backplane and devices on the second backplane.

24. The quantum control system according to any one of claims 18 to 23, further comprising a clock synchronization apparatus,
wherein the clock synchronization apparatus is configured to provide a same reference clock for the signal processing apparatus and the RF transceiver apparatus.

25. The quantum control system according to claim 24, further comprising a server and a network switch, wherein each of the at least one RF transceiver apparatus communicates with the server by means of the network switch, and the routing board communicates with the server.

26. The quantum control system according to claim 25, wherein the quantum control system further comprises a central control apparatus, all the routing board of the at least one signal processing apparatus is connected to the central control apparatus, and the central control apparatus is configured to synchronously control the plurality of first signal processing boards and the plurality of second signal processing boards by means of the routing board, or
wherein the quantum control system further comprises a server communicated with a central control apparatus and/or the routing board.

27. A quantum control apparatus, configured to control a measurement and control integrated backplane of a quantum chip, the quantum control apparatus comprising:
a trigger module configured to output a trigger signal;
a microcontroller; and
a switch module electrically connected to the trigger module and configured to select an operating channel of the microcontroller based on the trigger signal,
wherein the microcontroller is electrically connected to the switch module and configured to set a corresponding control signal according to the selected operating channel and output the control signal, and the control signal is used to control the measurement and control integrated backplane to enter a corresponding operating mode.

28. The quantum control apparatus according to claim 27, wherein the measurement and control integrated backplane comprises a plurality of functional boards, and
the switch module comprises a plurality of self-locking non-reset switches respectively configured to control reset of the measurement and control integrated backplane and reset of the functional boards via the selected operating channel of the microcontroller.

29. The quantum control apparatus according to claim 27, further comprising:
a first output module electrically connected to the microcontroller and configured to forward the control signal to the measurement and control integrated backplane.

30. The quantum control apparatus according to claim 27, further comprising:
a temperature control module electrically connected to the microcontroller and the measurement and control integrated backplane respectively and configured to monitor a real-time temperature of the measurement and control integrated backplane and adjust in real time the temperature of the measurement and control integrated backplane according to a target temperature.

31. The quantum control apparatus according to claim 30, wherein the temperature control module comprises a plurality of temperature sensors and a plurality of heat sinks, and the plurality of temperature sensors and the plurality of heat sinks are electrically connected to the microcontroller respectively,
the plurality of temperature sensors are arranged on the measurement and control integrated backplane respectively, and are configured to detect the real-time temperature of the measurement and control integrated backplane and transmit temperature data to the microcontroller,
the microcontroller generates a temperature adjust signal based on the temperature data, and
the plurality of heat sinks are configured to receive the temperature adjust signal sent by the microcontroller and adjust in real time the temperature of the measurement and control integrated backplane based on the temperature adjust signal and the target temperature.

32. The quantum control apparatus according to claim 30, further comprising a second output module and a terminal device in communication connection with each other,
wherein the second output module is electrically connected to the microcontroller and configured to upload operating-state information of the microcontroller, the switch module, the measurement and control integrated backplane and the temperature control module to the terminal device, and
the terminal device is configured to receive the operating-state information of the microcontroller, the switch module, the measurement and control integrated backplane and the temperature control module and monitor operating states thereof.

33. The quantum control apparatus according to claim 32, wherein the second output module establishes communication with the terminal device using at least one of a WIFI module, an Ethernet interface, a type-c interface or a 4G module.

34. The quantum control apparatus according to claim 32, wherein the terminal device comprises one or more of a computer, a mobile phone and a multimedia playback device.

35. The quantum control apparatus according to claim 30, further comprising:
a power supply module configured to supply power to the microcontroller, the switch module, the trigger module and the temperature control module.

36. The quantum control apparatus according to claim 27, wherein the microcontroller is an STM series chip, an STC series chip or an ARM series chip.

37. A quantum control system, comprising the quantum control apparatus according to any one of claims 1 to 10.

38. A quantum computer, comprising the quantum control apparatus according to any one of claims 1 to 12, or the quantum control system according to any one of claims 13 to 17, or the quantum control system according to any one of claims 18 to 26, or the quantum control apparatus according to any one of claims 27 to 36, or the quantum control system according to claim 37.
